(19) Europäisches Patentamt / European Patent Office / Office européen des brevets

(11) **EP 2 322 948 A1**

(12) **EUROPEAN PATENT APPLICATION**

(43) Date of publication:
**18.05.2011 Bulletin 2011/20**

(21) Application number: **09176195.7**

(22) Date of filing: **17.11.2009**

(51) Int Cl.:
***G01S 7/292*** *(2006.01)* ***G01S 7/52*** *(2006.01)*
***G01S 7/527*** *(2006.01)* ***G01S 13/04*** *(2006.01)*
***G01S 15/04*** *(2006.01)*

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicants:
- **Mitsubishi Electric R&D Centre Europe B.V.**
  **The Surrey Research Park**
  **Guildford, Surrey GU2 7YD (GB)**
  Designated Contracting States:
  **GB**
- **Mitsubishi Electric Corporation**
  **Chiyoda-ku**
  **Tokyo 100-8310 (JP)**
  Designated Contracting States:
  **AT BE BG CH CY CZ DE DK EE ES FI FR GR HR HU IE IS IT LI LT LU LV MC MK MT NL NO PL PT RO SE SI SK SM TR**

(72) Inventor: **Szajnowski, Dr. Wieslaw Jerzy**
**Guildford, Surrey GU1 2AR (GB)**

(74) Representative: **HOFFMANN EITLE**
**Patent- und Rechtsanwälte**
**Arabellastraße 4**
**81925 München (DE)**

(54) **Detection of sinusoidal waveform in noise**

(57) A signal processing method is disclosed for detecting the presence of a sinusoidal waveform embedded in noise. The method is particularly applicable to detecting multiple sine-wave pulses embedded in noise when each pulse has a random phase and a pulse amplitude that may fluctuate in any arbitrary manner. The method comprises the steps of processing a received signal to calculate a measure of the mean level of the signal and a measure of the concordance of a zero-crossing pattern of the signal with a uniform pattern exhibited by a sinusoidal waveform having a frequency equal to the centre frequency of the signal, calculating a product using the measure of the mean level of the signal and the measure of the concordance in accordance with the formula $L^{\Gamma}H^{\Omega}$ (C) or $L^{\Gamma}C^{\Omega}$ en, where L is the measure of the mean level of the signal, C is the measure of the concordance, H is a weighting function, $\Gamma$ is a, not necessarily integer, value greater than or equal to 1, and $\Omega$ is a non-zero, not necessarily integer, value not exceeding that of $\Gamma$, wherein the product is calculated for each of a plurality of disjoint signal segments, the plurality of products are summed or averaged and determination is made whether the received signal contains a sinusoidal waveform in dependence upon the calculated sum or average of the products and a decision threshold.

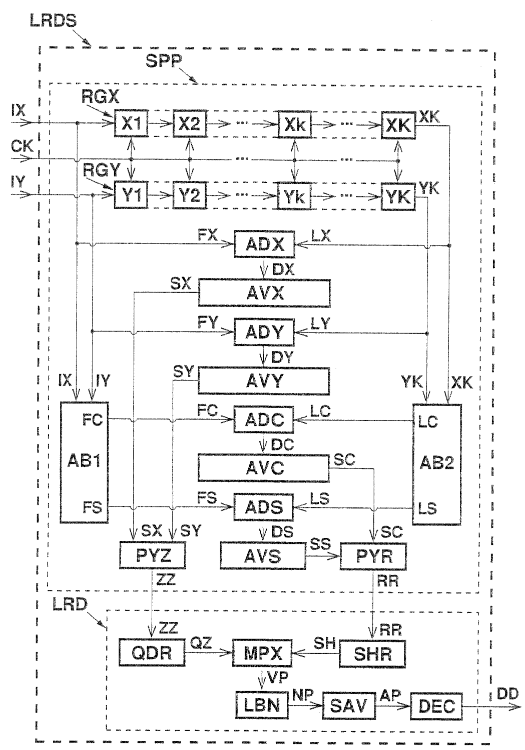


*FIG. 6*

EP 2 322 948 A1

## Description

### Field of the Invention

This invention relates to a method and apparatus for detecting a sinusoidal waveform embedded in noise. It is particularly, but not exclusively, useful for detecting multiple sine-wave pulses embedded in noise, when each pulse has a random phase and the pulse amplitude may fluctuate in any arbitrary manner. The invention is especially, but not exclusively, applicable to the detection of observed reflections of transmitted pulses of electromagnetic or ultrasonic energy, for example in homeland security networks to detect a potential intruder.

### Background of the Invention

In many problems of practical interest, there is a need to detect the presence of a weak fluctuating sinusoidal waveform in background noise. For example, a physical system or phenomenon under investigation may manifest its presence by producing a sinusoidal electromagnetic or ultrasonic signal.

An observed signal may originate from the system itself, when the system acts as a signal source, such as a radio transmitter. Alternatively, an observed signal may be obtained in response to some form of excitation, e.g., when in non-destructive testing a suitable probing signal is scattered by a sample under investigation.

Another application in which there is a need to detect weak signals is that of robot navigation, e.g., in noisy industrial environment. In this case, multiple obstacle detection may be achieved by sending suitable electromagnetic or ultrasonic signals and determining the time-of-arrival of reflected echoes in the presence of noise and other interference.

One important example of utilising a method to detect weak sine-wave signals is that of a distributed sensor network in homeland security/protection applications. Such networks may be installed for monitoring purposes to offer improved continuous surveillance of critical infrastructure, including power grids, power plants, gas and oil pipelines and water supply systems.

Fig. 1 depicts a surveillance region of interest in which a plurality of J sensors, SD1, SD2, ... , SDJ, are dispersed in some suitable fashion. There is also a dedicated coherent illuminator CIL that radiates interrogating electromagnetic or ultrasonic waves in a nominal direction of a potential intruder INR. If an intruder appears in the region under surveillance, then it will scatter the interrogating waves in different directions, and a part of the backscattered power will be captured and processed by at least some sensors deployed in the region. Each of the sensors will then convey to the so-called data fusion centre DFC a single value that encapsulates all relevant information required by the data fusion centre DFC to make an optimum detection decision.

The coherent illuminator CIL may, for example, transmit an interrupted carrier wave (on-off modulation) at frequency F01 with a repetition interval $T_P$, and a mark-space ratio equal to unity. Fig. 2 a) shows schematically such a pulsed transmission, and Fig. 2 b) depicts its power spectrum. Such a highly regular transmission format is advantageous when devising an efficient signal detection system.

In order to double the total transmitted power, the illuminator CIL may also co-transmit (at the same time) another carrier at a different frequency (say, F02) in such a fashion that the two transmissions are interleaved in time to form a 'syncopated' continuous transmission format with a constant power. Fig. 2 c) depicts schematically the two co-transmitted interrogating waveforms.

It is assumed that each sensor has the knowledge of the frequency, or frequencies, and the format of interrogating transmission employed by the coherent illuminator CIL. In a simple case of a single-frequency on-off transmission, there will be just two relevant parameters: the carrier frequency F01 and the pulse repetition interval $T_P$. Therefore, a signal received by each sensor will comprise either sine-wave pulses embedded in noise, or noise alone.

From a statistical viewpoint, a problem of signal detection is equivalent to selecting one of the two alternative hypotheses:

- $H_0$: noise alone present
- $H_1$: signal present (in noise).

Consequently, the application of a detection procedure to a received signal will result in making one of two alternative decisions: "noise alone present" or "sine wave present".

One well known method of constructing useful detection procedures is based on the likelihood ratio

$$L(W) = \frac{p(W|H_1)}{p(W|H_0)} \quad \ldots (1)$$

where W is some observed quantity (e.g., signal level); $p(W|H_0)$ and $p(W|H_1)$ are conditional probability density functions of W under respective hypotheses $H_0$ or $H_1$. Then, a decision "signal present" is made, when an observed value of the likelihood-ratio L(W) exceeds some predetermined decision threshold $L_0$, i.e., when

$$L(W) > L_0 \quad \ldots. (2)$$

The value of the detection threshold is so selected as to obtain an acceptable level of the probability of false alarm $P_F$, defined as the probability of deciding "signal present" when, in fact, noise alone is present.

As well known to those skilled in the art, an optimum detection in Gaussian noise of a sequence comprising M sine-wave pulses with randomly varying phases is based on a likelihood function $L(q_1, q_2, ..., q_M)$ of M variables $q_1$, $q_2$, ...,$q_M$, each such variable $q_m$ being obtained from the response of a so-called *matched filter.* The likelihood function is of the form

$$L(\boldsymbol{q}) \triangleq L(q_1, q_2, \ldots, q_M) = \sum_{m=1}^{M} \ln I_0\left(\frac{q_m A_m}{\sigma_N^2}\right) \quad \ldots (3)$$

where $I_0(\cdot)$ is a Bessel function, $A_m$ is the amplitude of an underlying m-th sine-wave pulse (if present), and $\sigma_N^2$ is the mean-square value of Gaussian noise.

Various detection procedures based on the above form of a likelihood function have been analysed in many text books; see, for example: R. N. McDonough and A. D. Whalen, Detection of Signals in Noise, Academic Press, San Diego, 1995.

Since the above likelihood function depends on the unknown amplitudes $A_m$ of sine-wave pulses to be detected, the function can only be implemented by a 'clairvoyant' processor. When the amplitudes $A_m$ are all equal, this problem is 'solved' in all conventional detection systems by employing one of the two approximations to the 'log-Bessel' non-linearity:

- for weak signals, i.e. small $q_m$ values, the non-linearity is approximated by a quadratic function of $q_m$;
- in the case of strong signals, i.e. large $q_m$ values, the non-linearity is approximated by a linear function of $q_m$.

Unfortunately, in this context, the distinction between 'weak' and 'strong' signals cannot be determined in any meaningful way, especially when dealing with strongly fluctuating pulses. Therefore current detection systems cannot determine which approximation to the 'log-Bessel' non-linearity is best to use.

As well known to those skilled in the art, a quadratic detector can also be employed to efficiently detect sine-wave pulses with amplitudes fluctuating in accordance with a Rayleigh distribution (i.e. the power of pulses is exponentially distributed). However, in practical applications, pulse amplitude may vary in accordance with any unspecified distribution, and some pulse returns may even totally disappear, due to shadowing effects and multipath interference.

The problem is even more complicated in the case of a distributed detection network in which different sensors capture reflected pulses with a different fluctuation pattern and almost certainly with a different mean level. The data fusion centre DFC must then deal with an aggregate likelihood function

$$L_A(q) = \sum_{j=1}^{J} L_j(q) \quad \ldots (4)$$

where each component $L_j(q)$ is also a likelihood function to be determined locally by a j-th sensor. Obviously, in this case, conventional approaches cannot lead to optimum detection procedures.

## Summary of the Invention

According to the present invention, there is provided a signal processing apparatus, comprising:

means for processing a received signal to calculate a first value comprising a measure of the mean level of the signal and a second value comprising a measure of the concordance of a zero-crossing pattern of the signal with a uniform pattern exhibited by a sinusoidal waveform having a frequency equal to the centre frequency of the signal; and

means for calculating a product for use in determining whether a signal is present using the measure of the mean level of the signal and the measure of the concordance in accordance with at least one of the formulae $L^{\Gamma}H^{\Omega}(C)$ and $L^{\Gamma}C^{\Omega}$, where: L is the measure of the mean level of the signal; C is the measure of the concordance; H is a weighting function; $\Gamma$ is a, not necessarily integer, value greater than or equal to 1; and $\Omega$ is a non-zero, not necessarily integer, value not exceeding that of $\Gamma$.

The apparatus may further comprise means for transmitting the calculated product to a remote processing apparatus for use thereby in determining whether the received signal contains a sinusoidal waveform or means in the apparatus itself for determining whether the received signal contains a sinusoidal waveform in dependence upon the calculated product and a decision threshold.

The means for processing the received signal may be arranged to calculate a measure of the mean level of the signal comprising a normalised measure with respect to a noise level.

The means for calculating the product may be arranged to calculate a respective product for each of a plurality of disjoint signal segments, and the means for determining whether the received signal contains a sinusoidal waveform may be arranged to sum or average the respective products and compare the resulting sum or average with the decision threshold.

The means for processing the received signal may be arranged to calculate a measure of the mean level of the signal comprising an envelope of the received signal, and a measure of the concordance comprising a phase concentration.

The weighting function H used by the apparatus may be a function of $\psi(R)$, where R is the phase concentration and $\psi(R)$ is a non-decreasing function of R.

$\psi(R)$ used by the apparatus may be a polynomial function comprising R, $R^3$ and $R^7$.

$\psi(R)$ used by the apparatus may be given by the equation:

$$\psi(R) \approx \frac{\pi}{2}\left(R - \frac{R^3}{3} + \frac{R^7}{5}\right).$$

The weighting function H used by the apparatus may be a function of tan $\psi(R)$.

The weighting function used by the apparatus may be given by:

$$H(R) = \sqrt{\frac{K\tan^2\psi(R)}{2 + K\tan^2\psi(R)}}$$

where $K$ is a constant.

The means for calculating a product may be so arranged as to calculate the product such that $1 \leq \Gamma \leq 5$.

The means for calculating a product may be so arranged as to calculate the product such that $\Gamma$=2 and $\Omega$=1 or $\Gamma$=4 and $\Omega$=2.

The present invention also provides a signal processing method, comprising:

processing a received signal to calculate a measure of the mean level of the signal and a measure of the concordance of a zero-crossing pattern of the signal with a uniform pattern exhibited by a sinusoidal waveform having a frequency equal to the centre frequency of the signal;

calculating a product using the measure of the mean level of the signal and the measure of the concordance in accordance with the formula $L^{\Gamma}H^{\Omega}$ (C) or $L^{\Gamma}C^{\Omega}$, where: L is the measure of the mean level of the signal; C is the measure of the concordance; H is a weighting function; $\Gamma$ is a, not necessarily integer, value greater than or equal to 1; and $\Omega$ is a non-zero, not necessarily integer, value not exceeding that of $\Gamma$; and

determining whether the received signal contains a sinusoidal waveform in dependence upon the calculated product and a decision threshold.

The present invention also provides a signal processing apparatus, comprising:

a concordance measure calculator operable to process a received signal to calculate a measure of the concordance of a zero-crossing pattern of the signal with a uniform pattern exhibited by sinusoidal waveform having a frequency equal to the centre frequency of the signal; and

an amplitude calculator operable to process the calculated measure of the concordance to derive therefrom a measure of the amplitude of a sinusoidal signal in the received signal.

The present invention also provides a signal processing method, comprising:

processing a received signal to calculate a measure of the concordance of a zero-crossing pattern of the signal with a uniform pattern exhibited by a sinusoidal waveform having a frequency equal to the centre frequency of the signal; and

processing the calculated measure of the concordance to derive therefrom a ratio of signal level to noise level for the received signal.

An embodiment provides an improved method to detect in noise sine-wave pulses with random phase and amplitude varying in any arbitrary manner.

An embodiment provides a signal processor capable of implementing such improved detection method.

An embodiment provides a detection method and a detection system to be utilised in a distributed detection network employing a plurality of sensors.

**Brief Description of the Drawings**

Embodiments of the invention will now be described, by way of example only, with reference of the accompanying drawings, in which:

Fig. 1 depicts basic elements of a sensor network intended to detect a potential intruder in a surveillance region of interest.

Fig. 2 a) shows schematically a pulsed transmission employed by a coherent illuminator.

Fig. 2 b) depicts the power spectrum of a pulsed transmission employed by a coherent illuminator.

Fig. 2 c) depicts schematically two co-transmitted interrogating waveforms used to increase the total transmitted power.

Fig. 3 depicts the relationship between the ratio ($A/\sigma_N$) and tan[$\psi$(R)] for the two approximations of the argument $\psi$-(R).

Fig. 4 shows 'saft-limiter' shapes of the weighting function H(R) for three different values of processing gain K.

Fig. 5 depicts the shape of a 'log-Bessel' nonlinearity.

Fig. 6 is a block diagram of a digital likelihood-ratio detection system constructed in accordance with an embodiment.

Fig. 7 depicts symbolically waveforms observed at different internal outputs of a digital likelihood-ratio detection system constructed in accordance with an embodiment.

Fig. 8 a) shows responses of the 'clairvoyant' likelihood-ratio detector and the generalised likelihood-ratio detector of an embodiment for fluctuating sine-wave pulses with the input mean signal-to-noise ratio of -23 dB.

Fig. 8 b) shows responses of the 'clairvoyant' likelihood-ratio detector and the generalised likelihood-ratio detector of an embodiment for fluctuating sine-wave pulses with the input mean signal-to-noise ratio reduced to -26 dB.

Fig. 9 a) shows responses of the 'clairvoyant' likelihood-ratio detector and the generalised likelihood-ratio detector of an embodiment for fluctuating sine-wave pulses with their mean amplitude switched randomly between -23 dB and -27.5 dB.

Fig. 9 b) shows responses of the 'clairvoyant' likelihood-ratio detector and the generalised likelihood-ratio detector of an embodiment for sine-wave pulses fluctuating according to a log-normal distribution.

Fig. 10 a) shows the response of the clairvoyant likelihood-ratio detector for sine-wave pulses fluctuating according to a log-normal distribution when the processing gain equals 500.

Fig. 10 b) shows the response of the generalised likelihood-ratio detector of an embodiment for sine-wave pulses fluctuating according to a log-normal distribution when the processing gain equals 500.

Fig. 11 shows responses of a conventional quadratic detector and the generalised likelihood-ratio detector of an embodiment for sine-wave pulses fluctuating according to a log-normal distribution.

Fig. 12 is a block diagram of a digital generalised coherent energy detection system constructed in accordance with an embodiment.

Fig. 13 a) is a block diagram of a two-channel analogue processor that performs the essential functions of a stochastic phasor processor incorporated in preferred embodiments.

Fig. 13 b) is a block diagram of a twin quadrature receiver that performs the essential functions of a stochastic phasor processor incorporated in preferred embodiments.

Fig. 14 is a block diagram of a detection sensor constructed in accordance with an embodiment.

Fig. 15 depicts symbolically the waveforms observed at different internal outputs of a detection sensor constructed in accordance with an embodiment.

## Description of Embodiments

Theoretical analysis of the implemented processing

Before describing specific embodiment of apparatus, a description of the theory underlying the processing performed by the apparatus will be given to assist understanding.

In accordance with embodiments of the invention, a product is calculated using two parameters, namely a measure of the mean level of the observed signal (referred to herein as a "mean level measure") and a measure of the concordance of a zero-crossing pattern of the observed signal with a uniform (regular) pattern exhibited by a sinusoidal waveform having a frequency equal to the centre frequency of the observed signal (referred to herein as a "zero-crossing concordance measure"). The calculated product is then used together with a decision threshold to determine whether the received signal contains a sinusoidal waveform.

One way of calculating the zero-crossing concordance measure and the mean level measure is to calculate a

phase concentration R (this being a zero-crossing concordance measure) and an envelope Z (this being a mean level measure) from two quadrature components, X(t) and Y(t), of an observed signal in the manner described below. Other ways of calculating suitable mean level measures and zero-crossing concordance measures are described in the Modifications and Variations section at the end of the description. It should be noted that the phase concentration R is equivalent to the 'mean resultant length' in the context of circular statistics, for example as described in K.V. Mardia and P.E. Jupp "Directional Statistics", Wiley, New York 2000, page 17.

As explained below, an unknown amplitude of a sine-wave embedded in noise is determined in a novel way from an observed signal that may contain noise alone or sine wave and noise, and the amplitude is then utilised to make a decision whether or not a signal is present within the noise. Obviously, in a noise-alone case, the amplitude of an absent sine wave is simply zero.

Consider a sine-wave of constant amplitude A and constant frequency $f_0$ corrupted by additive zero-mean, band-pass Gaussian noise with mean-square value (power) $\sigma_N^2$. Accordingly, two quadrature components of an observed combined signal can be expressed as

$$X(t) = A\cos(2\pi f_0 t + \alpha) + N_X(t), \quad 0 < t < T \qquad \dots (5)$$

$$Y(t) = A\sin(2\pi f_0 t + \alpha) + N_Y(t), \quad 0 < t < T \qquad \dots (6)$$

where $\alpha$ is unknown phase of the sine wave, $N_X(t)$ and $N_Y(t)$ are band-pass noise components, and T is an observation time interval. The phase, although unknown, is assumed to be constant during the entire interval T which, in this context, is referred to as a *coherent processing interval* (CPI).

The power of either quadrature component, X(t) or Y(t), is the sum of the sine-wave power, $P_S = A^2/2$, and noise power $\sigma_N^2$; hence

$$P_X = P_Y = \frac{A^2}{2} + \sigma_N^2 \qquad \dots (7)$$

The signal-to-noise ratio D, defined as the signal power divided by noise power is equal to

$$D = \frac{A^2}{2\sigma_N^2} \qquad \dots (8)$$

The envelope of the observed signal is determined from

$$Z(t) = \sqrt{X^2(t) + Y^2(t)} \qquad \dots (9)$$

and the total power $P_Z$ contained in the envelope is equal to

$$P_Z = P_X + P_Y = A^2 + 2\sigma_N^2 \qquad \dots (10)$$

The envelope power $P_Z$ is then the sum of a doubled sine-wave power and the joint power $2\sigma_N^2$ of the two

noise components.

When noise is being gradually added to a pure sine wave, the regular zero-crossing pattern of the sine wave becomes more and more perturbed, and the observed departure from uniformity will increase with decreasing signal-to-noise ratio D. A suitable measure of concordance between the two patterns: the underlying regular one and the pattern resulting from destructive action of noise, is provided by the so-called phase concentration R.

The value of phase concentration R is determined from a combined signal, comprising sine wave and noise, as follows. Two quadrature components, X(t) and Y(t), of an observed signal are sampled at the time instants determined by a clock whose frequency is equal, or otherwise suitably related, to the frequency $f_0$ of a sine wave under examination. Each sample pair, $(X_k,Y_k)$, obtained at a time instant $t_k$, k = 1, 2, ... , K, is used to calculate the following two quantities

$$\cos\theta_k = \frac{X_k}{\sqrt{X_k^2 + Y_k^2}} \quad \text{and} \quad \sin\theta_k = \frac{Y_k}{\sqrt{X_k^2 + Y_k^2}} \qquad \ldots (11)$$

Then, K pairs of quantities, $(\cos \theta_k, \sin \theta_k)$, are utilised to determine the phase concentration R as

$$R = \sqrt{\left(\frac{1}{K}\sum_{k=1}^{K}\cos\theta_k\right)^2 + \left(\frac{1}{K}\sum_{k=1}^{K}\sin\theta_k\right)^2} \; ; \; 0 \le R \le 1 \qquad \ldots (12)$$

As noted previously, the phase concentration R is equivalent to the 'mean resultant length' in the context of circular statistics.

By construction, phase concentration R is independent of signal level and it may only assume values from the (0,1)-interval. The maximum phase concentration, R = 1, is achieved by an undistorted sine wave, whereas the minimum concentration, R = 0, corresponds to random noise.

When phase concentration R is gradually decreasing from unity to zero, instantaneous phases $\theta_k$ become more and more dispersed around a fixed unknown value $\alpha$, and at R equal to zero, they will assume a uniform distribution that exhibits maximum entropy. It should be pointed out that phase concentration R is independent of any particular value that unknown sine-wave phase $\alpha$ may take.

The above analysis indicates that phase concentration R will depend directly on the signal-to-noise ratio D. The inventor has established that a related ratio, the sine-wave amplitude A and the root-mean-square (rms) value $\theta_N$ of noise, can be determined from

$$\frac{A}{\sigma_N} = \tan\psi(R) \qquad \ldots (13)$$

where

$$\psi(R) \approx \frac{\pi}{2}\left(R - \frac{R^3}{3} + \frac{R^7}{5}\right) \qquad \ldots (14)$$

Consequently, the signal-to-noise ratio can be expressed as

$$D = \frac{1}{2}\tan^2\psi(R) \qquad \ldots (15)$$

In a weak-signal case, i.e. when A « $\sigma_N$, the single-term approximation

$$\psi(R) \approx \pi R/2 \qquad \ldots (16)$$

appears to be adequate. Therefore, in such cases,

$$D \approx \frac{\pi^2 R^2}{8} \qquad \ldots (17)$$

Fig. 3 depicts the relationship between the ratio ($A/\sigma_N$) and tan[$\psi(R)$] for the two approximations of the argument $\psi(R)$. Each point of the graph has resulted from $10^6$ Monte 5 Carlo replications. The single-term approximation may be employed when the ratio $A/\sigma_N$ is less than 0.3, i.e. D < 0.045 (D < -13.5 dB).

Samples, ($X_k$,$Y_k$; k = 1, 2, ..., K), of the respective quadrature components X(t) and Y(t) are also used to determine the envelope

$$Z_F = \sqrt{\left(\frac{1}{K}\sum_{k=1}^{K} X_k\right)^2 + \left(\frac{1}{K}\sum_{k=1}^{K} Y_k\right)^2} \qquad \ldots (18)$$

of a signal being processed. In a signal-alone case, the envelope $Z_F$ simply equals the amplitude A of a sine wave. However, when a sine wave is embedded in noise, the resulting values of $Z_F$ are dispersed randomly around the true value of amplitude A, and their spread is proportional to the ratio $\sigma_N/\sqrt{K}$.

The power $P_{ZF}$ of the envelope $Z_F$ of such averaged (filtered) signal comprises two components: the (unchanged) doubled power of the sine wave and the noise power reduced by filtering; therefore,

$$P_{ZF} = A^2 + 2\sigma_N^2/K \qquad \ldots (19)$$

The noise reduction factor will be equal to K so long as consecutive samples of the quadrature components, X(t) and Y(t), remain uncorrelated. The noise reduction factor K is often referred to as *processing gain.*

The power $P_{ZF}$ of the envelope $Z_F$ of the filtered signal can be expressed in an equivalent form as

$$P_{ZF} = A^2[1 + 1/(KD)] \qquad \ldots (20)$$

Combining the above expression with the formula for the signal-to-ratio D yields

$$P_{ZF} = A^2\{1 + 2/[K \tan^2\psi(R)]\} \qquad \ldots (21)$$

hence

$$A^2 = \frac{K\,P_{ZF}\,\tan^2\psi(R)}{2 + K\,\tan^2\psi(R)} \quad \ldots (22)$$

Consequently, the unknown amplitude A of a sine wave embedded in noise can be estimated from phase concentration R and the power $P_{ZF}$ of the envelope $Z_F$ as follows

$$A = H(R)\,\sqrt{P_{ZF}} \quad \ldots (23)$$

where H(R) is a non-decreasing weighting function of a general shape of a soft limiter, such as

$$H(R) = \sqrt{\frac{K\,\tan^2\psi(R)}{2 + K\,\tan^2\psi(R)}} \quad \ldots (24)$$

Fig. 4 shows the weighting function H(R) for three different values of processing gain K. As seen, the function H(R) exhibits a characteristic shape of a 'soft-limiter' type.

The slope of the weighting function H(R) at R = 0 is equal to $\pi\sqrt{K/8}$ ; therefore, for weak sine waves, the weighting function can be approximated as

$$H(R) \approx \pi R\sqrt{K/8} \quad \ldots (25)$$

when $A/\sigma_N < 1/(2\sqrt{K})$.

It is important to note that the squared envelope $Z_F^2$ may itself serve as a practical estimate of instantaneous envelope power; therefore, in many applications, the unknown amplitude A of a sine wave embedded in noise can be determined from

$$A = H(R)\,Z_F \quad \ldots (26)$$

The results of the above analysis, including practical approximations, have been used by the inventor to devise various improved techniques for detecting a sine wave or its segments, such as pulses, embedded in noise.

*Generalized likelihood-ratio (GLR) procedures*

In accordance with an embodiment of the invention, a generalised likelihood-ratio (GLR) test is constructed as follows

$$\sum_{m=1}^{M} \ln I_0\left[\frac{Z_{Fm}^2 H(R_m)}{\sigma_N^2}\right] > \Lambda_{GLR} \quad \ldots (27)$$

where and $Z_{Fm}$ and $R_m$ are, respectively, the envelope and concentration determined for an m-th sine-wave pulse, H

($R_m$) is the weighting function introduced above, and $\sigma_N^2$ is the mean-squared value of input noise; $\Lambda_{GLR}$ is a suitably chosen decision threshold.

More specifically, in the above expression

$$H(R_m) = \sqrt{\frac{K \tan^2\psi(R_m)}{2 + K \tan^2\psi(R_m)}} \quad \ldots (28)$$

and

$$\psi(R_m) \approx \frac{\pi}{2}\left(R_m - \frac{R_m^3}{3} + \frac{R_m^7}{5}\right) \quad \ldots (29)$$

It should be noted that in most practical cases, the mean-squared value $\sigma_N^2$ of input noise can be estimated sufficiently well from suitable long-term measurements of system's noise. Therefore, the envelope $Z_{Fm}$ can be normalised as follows

$$Z_m = \frac{Z_{Fm}}{\sigma_N} \quad \ldots (30)$$

Consequently, the resulting GLR test assumes the form

$$\sum_{m=1}^{M} \ln I_0[\, Z_m^2\, H(R_m)\, ] > \Lambda_{NLR} \quad \ldots (31)$$

where $\Lambda_{NLR}$ is a suitably chosen decision threshold.

As seen, in the above test, a soft-limiting action of the weighting function H(R) is somewhat counterbalanced by that of the 'log-Bessel' nonlinearity ln $I_0(\cdot)$, depicted in Fig. 5.

*Generalized coherent energy (CE) detectors*

Quartic coherent energy detector

For a small signal-to-noise ratio, $\psi(R_m) \approx \pi R_m/2$, hence

$$H(R_m) = \sqrt{\frac{\pi^2 K R_m^2}{8 + \pi^2 K R_m^2}} \quad \ldots (32)$$

Also,

$$\ln I_0(u) \approx \frac{u^2}{4}, \qquad u \ll 1 \qquad \ldots (33)$$

Therefore, in accordance with an embodiment, in a case of weak signals, the generalised likelihood-ratio (GLR) test will be simplified as follows

$$\sum_{m=1}^{M} \frac{Z_m^4 \, \pi^2 K \, R_m^2}{8 + \pi^2 K \, R_m^2} > \Lambda_{QT} \qquad \ldots (34)$$

where $\Lambda_{QT}$ is a suitably chosen decision threshold. In the following, a system that implements the above detection procedure will be referred as a *quartic coherent energy* detector.

quadratic coherent energy detector

The method for the estimation of unknown amplitude A of a sine wave embedded in noise can be exploited to devise a procedure for determining this part of the total envelope power that can be attributed to the sine-wave pulses alone.

Let $Z_m$ be an envelope of the normalised response of a suitable filter (such as matched filter or band-pass filter) excited by an m-th sine-wave pulse embedded in noise. Then,

$$A_m^2 = H^2(R_m) \, Z_m^2 \qquad \ldots (35)$$

and the total sine-wave power $P_{SM}$ contained in all M pulses can be determined from

$$P_{SM} = \sum_{m=1}^{M} \frac{Z_m^2 \, K \tan^2 \psi(R_m)}{2 + K \tan^2 \psi(R_m)} \qquad \ldots (36)$$

where

$$\psi(R_m) \approx \frac{\pi}{2}\left(R_m - \frac{R_m^3}{3} + \frac{R_m^7}{5}\right) \qquad \ldots (37)$$

For a small signal-to-noise ratio, $\psi(R_m) \approx \pi R_m/2$, hence

$$P_{SM} = \sum_{m=1}^{M} \frac{Z_m^2 \, \pi^2 K \, R_m^2}{8 + \pi^2 K \, R_m^2} \qquad \ldots (38)$$

Further Examples

In accordance with an embodiment, either of the two expressions for $P_{SM}$ can be exploited to construct yet

another procedure for detecting multiple sine-wave pulses in noise. Accordingly, the presence of multiple sine-wave pulses will be declared, if

$$P_{SM} > \Lambda_{QD} \quad \ldots (39)$$

where $\Lambda_{QD}$ is a suitably chosen decision threshold. In the following, a system that implements the above detection procedure will be referred as a *quadratic coherent energy* detector.

Another quadratic coherent energy detector

In accordance with a further embodiment, the presence of multiple sine-wave pulses will be declared, if

$$\sum_{m=1}^{M} Z_m^2 H(R_m) > \Lambda_{QD2} \quad \ldots (40)$$

where $\Lambda_{QD2}$ is a suitably chosen decision threshold. This particular form of a detection procedure is obtained from the GLR test under the assumption of a large signal-to-noise ratio D.

General case

The above, and also other, forms of a *generalised coherent energy detector* may be expressed by a single formula as

$$\sum_{m=1}^{M} Z_m^{\Gamma} H^{\Omega}(R_m) > \Lambda_{CED} \quad \ldots (41)$$

where a first parameter $\Gamma$ may assume any, not necessarily integer, value greater than or equal to 1, and preferably from the interval (1,5), as the inventor has found that values from this interval give particularly good results, whereas a second parameter $\Omega$ may assume any non-zero, not necessarily integer, value not exceeding that of $\Gamma$. In the above expression, $\Lambda_{CED}$ is a suitably chosen decision threshold.

In the case of weak signals, the above expression can be simplified as follows

$$\sum_{m=1}^{M} Z_m^{\Gamma} R_m^{\Omega} > \Lambda_{C\Gamma\Omega} \quad \ldots (42)$$

when $A/\sigma_N < 1/(2\sqrt{K})$; is a suitably chosen decision threshold.

A number of embodiments comprising apparatus to implement the processing described above will now be described.

First Embodiment - Generalised Likelihood-Ratio (LR) Detector

Fig. 6 is a block diagram of a digital likelihood-ratio detection system LRDS constructed in accordance with a first embodiment. The system consists of two subsystems: a stochastic phasor processor SPP and a likelihood-ratio

detector LRD.

The stochastic phasor processor SPP comprises the following blocks:

- two shift registers, RGX and RGY, each comprising K respective cells, X1, X2, ... , XK and Y1, Y2, ..., YK
- two arithmetic blocks, AB1 and AB2
- four adders, ADX, ADY, ADC and ADS
- four averaging blocks, AVX, AVY, AVC and AVS
- two 'Pythagoras' circuits, PYZ and PYR.

The likelihood-ratio detector LRD comprises the following blocks:

- a squarer QDR
- a multiplier MPX
- two look-up tables, SHR and LBN
- a synchronous averaging circuit SAV
- a decision block DEC.

The likelihood-ratio detection system LRDS operates as follows. Digital samples IX and IY that represent two quadrature components, X(t) and Y(t), of a signal being processed are supplied by suitable analogue-to-digital converters at a rate equal to the frequency of clock pulses appearing at input CK. A stream of digital samples IX is shifted continually into the register RGX. Accordingly, the K cells, X1, X2, ... , XK, of the register RGX will store, at any time instant, K latest samples received at input IX.

In a similar fashion, a stream of digital samples IY is shifted continually into the register RGY, and the K cells, Y1, Y2, ... , YK, of the register RGY will store, at any time instant, K latest samples received at input IY. Therefore, the operation of the two shift registers, RGX and RGY, may be viewed as being equivalent to moving concurrently and in parallel two corresponding 'data windows' along two streams of digital samples.

The number K of cells used in both the shift registers, RGX and RGY, is chosen in such a way that the product of K and the clock period is equal to the duration of an expected sine-wave pulse, or a segment of a sine wave.

The averaging block AVX provides at its output SX the average of K samples stored at any time instant in the shift register RGX; hence

$$\text{state of ACX} = (X1 + X2 + ... + XK) / K \qquad \ldots (43)$$

In order to avoid using all K outputs of the K cells, the above summing operation is arranged in the following manner.

At each time instant, the averaging block AVX 'adjusts' its state by subtracting the sample XK just leaving the register RGX and adding a sample IX just entering the register RGX. Accordingly, the adder ADX forms the difference DX between sample IX appearing at input FX and sample XK appearing at input LX; this difference DX is added to the current state of the averaging block AVX.

In a no-noise case, for first K samples appearing at input IX, the adder ADX will reproduce these values at its output DX, since only zero-valued samples are leaving the shift register RGX. Then, the adder ADX will start producing differences between samples entering and leaving the shift register RGX.

In a similar fashion, the averaging block AVY provides at its output SY the average of K samples stored at any time instant in the shift register RGY; hence

$$\text{state of ACY} = ( Y1 + Y2 + ... + YK) / K \qquad \ldots (44)$$

The averaging block AVY is driven by a value DY provided the adder ADY. The value DY is the difference between sample IY appearing at input FY and sample YK appearing at input LY.

The outputs, SX and SY, of the respective averaging blocks, ACX and ACY, are utilised by the 'hythagoras' circuit PYZ to determine a representation ZZ of the envelope Z of a signal being processed

$$Z = \sqrt{(SX)^2 + (SY)^2} \quad \ldots (45)$$

This representation is provided at output ZZ of the 'Pythagoras' circuit PYZ. Therefore, this part of the coherent power detection system CPDS can be regarded as a conventional matched filter.

In order to avoid using additional shift registers for storing sines and cosines, two arithmetic blocks, AB1 and AB2, are employed. The arithmetic block AB1 provides at its outputs FC and FS, respectively, the value of the cosine and the sine determined from samples IX and IY. Similarly, the arithmetic block AB2 provides at its outputs LC and LS, respectively, the value of the cosine and the sine determined from samples XK and YK.

The averaging block AVC provides at its output SC the average of K cosines calculated from K sample pairs

(X1,Y1), (X2,Y2), ... , (XK,YK)

stored at any time instant in the shift registers RGX and RGY. Hence,

$$\text{state of ACC} = (\cos\theta 1 + \cos\theta 2 + ... + \cos\theta \text{K}) / \text{K} \quad \ldots (46)$$

where θk = arctan(Yk/Xk), k = 1, 2, ..., K, and arctan(·) is a four-quadrant operation.

The averaging block AVC is driven by a value DC provided by the adder ADC. The value DC is the difference between two values, FC and LC, supplied respectively by the arithmetic blocks AB1 and AB2.

In a similar fashion, the averaging block AVS provides at its output SS the average of K sines calculated from K sample pairs

(X1,Y1), (X2,Y2), ... , (XK,YK)

stored at any time instant in the shift registers RGX and RGY. Hence,

$$\text{state of ACC} = (\sin\theta 1 + \sin\theta 2 + ... + \sin\theta \text{K}) / \text{K} \quad \ldots (47)$$

where θk = arctan(Yk/Xk), k = 1, 2, ... , K, and arctan(·) is a four-quadrant operation.

The averaging block AVS is driven by a value DS provided by the adder ADS. The value DS is the difference between two values, FS and LS, supplied respectively by the arithmetic blocks AB1 and AB2.

The outputs, SC and SS, of the respective averaging blocks, AVC and AVS, are used by the 'Pythagoras' circuit PYR to determine a representation RR of the phase concentration R of a signal being processed

$$R = \sqrt{(SC)^2 + (SS)^2} \quad \ldots (48)$$

This representation is provided at output RR of the 'Pythagoras' circuit PYR.

The stochastic phasor processor SPP supplies to the likelihood-ratio detector LRD two values: a representation ZZ of the envelope and a representation RR of phase concentration. These two values are determined in a continuous 'sliding-window' manner for each segment of input signal having the duration of an expected sine-wave pulse.

The squarer QDR uses a representation ZZ of the envelope Z to determine the square $Z^2$ of this envelope. A representation RR of phase concentration R is applied to the input of the look-up table SHR that stores coefficients H (R) given by

$$H(R) = \sqrt{\frac{K \tan^2\psi(R)}{2 + K \tan^2\psi(R)}} \quad \ldots (49)$$

where

$$\psi(R) \approx \frac{\pi}{2}\left(R - \frac{R^3}{3} + \frac{R^7}{5}\right) \quad \ldots (50)$$

A value of the coefficient H(R) is applied to input SH of the multiplier MPX whereas its other input QZ is driven by a value of the squared envelope $Z^2$. The multiplier MPX produces at its output VP a representation of the product of a squared envelope $Z^2$ multiplied by a weight H(R), being a measure of coherence of the signal under examination.

Representations of the products $[Z^2H(R)]$, one product determined for each of M received sine-wave pulses, are applied to the input VP of the look-up table LBN that stores corresponding values of a 'log-Bessel' nonlinearity, In $I_0(\cdot)$. Resulting values NP are averaged in a synchronous manner in the synchronous averaging circuit SAV to produce an output AP indicative of the generalised likelihood function. It is expected that noise alone will, on average, produce a smaller value of the likelihood function than that obtained for a sequence of sine-wave pulses embedded in noise.

The operation of the synchronous averaging circuit SAV is governed by a sequence of trigger pulses synchronised with the known repetition frequency of sine-wave pulses to be detected.

The decision block DEC compares its input value AP to a suitably chosen decision threshold; if the threshold has been exceeded, then a decision "sine-wave pulses present" will be declared; the detection decision is provided at output DD.

Fig. 7 depicts symbolically a sequence PP of input sine-wave pulses (with noise removed for clarity), corresponding outputs ZZ and RR representing, respectively, the envelope and phase concentration, and output NP that drives the synchronous averaging circuit SAV. The circuit SAV incorporates a suitable internal clock that supplies trigger pulses at regular intervals equal to the pulse repetition interval Tp.

The synchronous averaging circuit SA adds together M segments of a waveform applied to its input; each such segment has duration Tp. As a result, a single combined waveform AP, also of duration $T_P$, is obtained; if sine-wave pulses are present, the waveform will exhibit a distinctive peak somewhere within the interval Tp (because exact arrival time of pulses is unknown). If this peak exceeds the decision threshold, then a decision "sine-wave pulses present" will be provided at output DD.

Computer simulations were used to compare the output signals produced by the invented generalised likelihood-ratio detector to those generated by a theoretically-optimum 'clairvoyant' likelihood-ratio detector. It was assumed that the number K of uncorrelated samples per pulse was equal to 100, and the number M of sine-wave pulses contained in a single pulse packet was equal to 500. The pulse squared amplitude $A^2$ fluctuated from pulse to pulse according to an exponential distribution

$$p(A^2) = \exp(-A^2) \quad \ldots (51)$$

and the initial phase $\alpha$ of each sine-wave pulse was a random variable distributed uniformly within a $(-\pi, \pi)$-interval.

In Fig. 8 a) the upper trace represents responses of the two detectors to pulse packets containing signal and noise, whereas the lower trace represents responses generated by noise alone. First 400 pulse packets (packets from 1 to 400) are processed by the 'clairvoyant' LR detector, and packets from 401 to 800 are processed by the invented generalised LR detector. In this case, the pulse amplitude A was equal to $0.1\sigma_N$, resulting in the input mean signal-to-noise ratio D of 0.005 (-23 dB). As seen, the responses of the two detectors look very similar.

Fig. 8 b) shows the detectors' responses for an input signal-to-noise ratio D reduced to 0.0025 (-26 dB). In this case, the generalised LR detector seems to offer a slightly degraded performance resulting from a smaller distance between the upper and the lower trace.

In Fig. 9 a), the responses were obtained for a case of fluctuating pulses with their mean amplitude additionally

switched in a random fashion between -23 dB and -27.5 dB with equal probabilities. Also in this case, the generalised LR detector seems to offer a slightly degraded performance.

In many practical cases, an exponential (or amplitude Rayleigh) model cannot adequately characterise pulse fluctuations, especially when larger amplitude values are more likely to occur. For example, it is known that fluctuations of signals reflected by man-made object do not follow Rayleigh distribution. Furthermore, received signals are additionally affected by shadowing and multipath effects.

For comparison purpose, Fig. 9 b) shows the responses for the case in which pulse amplitude fluctuations are governed by a log-normal distribution, known to exhibit a longer 'tail'. As seen, the invented generalised LR detector offers a good discrimination between signal and noise; however, large responses to sine-wave pulses embedded in noise seem to occur less frequently than in the case of the 'clairvoyant' LR detector

The observed suppression of larger responses in the invented LR detector is the result of a moderate processing gain. When the processing gain K was increased from 100 to 500, both the processors produced very similar responses when stimulated by the same pulses and noise.

Fig. 10 a) shows the response of a 'clairvoyant' LR detector whereas the response of the invented generalised LR detector is shown in Fig. 10 b). As seen, the structure (location and height) of large responses is almost the same in both the cases.

A detection performance of the invented generalised LR detector will approach that of a 'clairvoyant' LR detector for greater processing gains K and/or larger signal-to-noise ratios D. Irrespective of this fact, the invented generalised LR detector appears to outperform many prior-art detection schemes.

For comparison purpose, Fig. 11 replicates the response of the generalised LR detector (shown also in Fig. 10 b)), for pulse packets 401 to 800, and additionally depicts the response of a conventional quadratic detector (pulse packets 1 to 400). As seen, in this case, for the same level of noise response, both the detectors offer a good discrimination between signal and noise; however, the invented generalised LR detector produces larger responses when excited by sine-wave pulses embedded in noise.

Second Embodiment - Generalised Coherent Energy (CE) Detector

Fig. 12 is a block diagram of a digital generalised coherent energy (CE) detection system CEDS constructed in accordance with a second embodiment. The system consists of two subsystems: a stochastic phasor processor SPP and a coherent energy detector CED.

The stochastic phasor processor SPP has the same structure and performs the same operation as the stochastic phasor processor SPP shown in Fig. 6.

The coherent energy detector CED comprises the following blocks:

- a multiplier MPX
- two look-up tables, ZGA and HOM
- a synchronous averaging circuit SAV
- a decision block DEC.

The stochastic phasor processor SPP supplies to the coherent energy detector CED two values: a representation ZZ of the envelope and a representation RR of phase concentration. These two values are determined in a continuous 'sliding-window' manner for each segment of input signal having the duration of an expected sine-wave pulse.

The look-up table ZGA uses a representation ZZ of the envelope Z to determine the quantity $Z^{\Gamma}$; a required value of the exponent $\Gamma$ is supplied to input GA of the table ZGA. A representation RR of phase concentration R is applied to input of the look-up table HOM that stores coefficients $[H(R)]^{\Omega}$, where H(R) is given by

$$H(R) = \sqrt{\frac{K \tan^2\psi(R)}{2 + K \tan^2\psi(R)}} \qquad \dots (52)$$

where

$$\psi(R) \approx \frac{\pi}{2}\left(R - \frac{R^3}{3} + \frac{R^7}{5}\right) \quad \ldots (53)$$

A required value of the exponent Q is supplied to input OM of the table HOM.

A value of the coefficient $[H(R)]^{\Omega}$ is applied to input HR of the multiplier MPX whereas its other input QZ is driven by a value of $Z^{\Gamma}$. The multiplier MPX produces at its output VP a representation of the product $\{Z^{\Gamma}[H(R)]^{\Omega}\}$.

Values of the two parameters, $\Gamma$ and $\Omega$, are either fixed or they are supplied by a suitable control unit.

The synchronous averaging circuit SA adds together M segments of a waveform applied to its input WP; each such segment has duration Tp. As a result, a single combined waveform AP, also of duration $T_P$, is obtained; if sine-wave pulses are present, the waveform will exhibit a distinctive peak somewhere within the interval $T_P$ (because exact arrival time of pulses is unknown). If this peak exceeds the decision threshold, then a decision "sine-wave pulses present" will be provided at output DD.

Variants of the Stochastic Phasor Processor in the First and Second Embodiments

The digital stochastic phasor processor SPP employed by the first and second embodiments, shown in Fig. 6 and Fig. 12, can be replaced by one of the two alternative subsystems

- a simple two-channel analogue processor TCP
- a twin quadrature receiver QQP.

*TCP processor*

Fig. 13 a) is a block diagram of a simple two-channel analogue processor TCP that performs the essential functions of a stochastic phasor processor SPP (employed in systems of Fig. 6 and Fig. 12).

The processor TCP comprises the following blocks:

- an input wide-band band-pass filter WBF
- a buffer BUF
- a hard limiter HLR
- two identical narrow-band band-pass filters, BFZ and BFR
- two identical envelope detectors, EDZ and EDR.

An input band-pass signal IS is processed by an input wide-band band-pass filter WBF and then its version IF is applied in parallel to a hard limiter HLR and a buffer BUF that compensates for the delay introduced by the hard limiter HLR.

It should be noted that the input wide-band band-pass filter WBF may not exist as a separate explicit block; it may merely represent bandwidth limitation introduced by some input stages of the system, such as a combination of an employed sensing element and low-noise preamplifier. In this context, the noise reduction factor K (processing gain) is equal to the power bandwidth of the filter WBF divided by that of the narrow-band filter BFZ (or BFR).

The centre frequency of both band-pass filters, BFZ and BFR, is equal to the frequency of sine-wave pulses to be detected. As known to those skilled in the art, the approximate bandwidth of those filters should be inversely proportional to the duration of sine-wave pulses to be detected.

The output HS of the hard limiter HLR is filtered in a band-pass filter BFR, whose output FH drives an envelope detector EDR. In a parallel channel, the output VS of the buffer BUF is filtered in a band-pass filter BFZ, whose output FZ drives an envelope detector EDZ.

The outputs, ZZ and RR, of the envelope detectors, EDZ and EDR, provide, respectively, representation of the signal envelope Z and the phase concentration R.

*Twin quadrature receiver QQP*

Fig. 13 b) is a block diagram of a twin quadrature receiver QQP that performs the essential functions of a stochastic phasor processor SPP (employed in systems of Fig. 6 and Fig. 12).

An input band-pass signal IS is processed by an input wide-band band-pass filter WBF and then its version IF is applied in parallel to a hard limiter HLR and a buffer BUF that compensates for the delay introduced by the hard limiter

HLR.

It should be noted that the input wide-band band-pass filter WBF may not exist as a separate explicit block; it may merely represent bandwidth limitation introduced by some input stages of the system, such as a combination of an employed sensing element and low-noise preamplifier.

The receiver QQP incorporates two identical quadrature receivers, QRZ and QRR; the receiver QRZ is driven by a signal VS supplied by a buffer BUF, whereas the receiver QRR is driven by a signal HS provided by a hard-limiter HLR. Both the buffer BUF and the hard limiter HLR are driven in parallel by signal IF.

Each of the two identical quadrature receivers, QRZ and QRR, comprises the following blocks

- two mixers (or multipliers), MXI and MXQ
- two low-pass filters, LPI and LPQ
- two signal conditioning units, EDI and EDQ
- a 'Pythagoras circuit' PYT

The functions and operations of the receiver QRZ are as follows. An input signal VS is applied in parallel to two mixers, MXI and MXQ. The other inputs of the mixers are driven in a usual way by sinusoidal and co-sinusoidal waveforms supplied by a conventional local oscillator.

The outputs, PI and PQ, of the respective mixers are filtered in the low-pass filters LPI and LPQ to produce two output signals LI and LQ. Those two signals are first converted to suitable forms, MI and MQ, in two signal conditioning units, EDI and EDQ. Then, the 'Pythagoras circuit' PYT is employed to produce a signal ZZ being a representation of the quantity $\sqrt{LI^2 + LQ^2}$

The functions and operations of the other receiver QRR are the same as described above. In this case, the output of the 'Pythagoras circuit' is denoted by RR.

The signal ZZ is a representation of the envelope Z, and the signal RR is a representation of phase concentration R.

In this case, the noise reduction factor K (processing gain) is equal to the one-sided power bandwidth of the filter WBF divided by the bandwidth of the low-pass filter LPI (or LPQ).

Example of a Sensor Constructed According to a Third Embodiment

Fig. 14 is a block diagram of a sensor SDJ to be utilised as any one of J identical sensors in a network shown in Fig. 1. The main task of the network is to detect a potential intruder by processing multiple sine-wave pulses reflected by intruder in response to an interrogating waveform transmitted by a suitable coherent illuminator.

The sensor SDJ incorporates the following blocks:

- a sensing element SEL
- a transmit element TEL
- an input wide-band band-pass filter WBF
- a linear amplifier LIN
- a limiting amplifier LIM
- two identical narrow-band band-pass filters, BFZ and BFR
- two identical logarithmic envelope detectors, LEZ and LER
- two constant-gain amplifiers, GA4 and GA2
- two adders, SUM and DIF
- a constant-delay element DEL
- a narrow-band filter NBF
- an envelope detector EDT

An input signal IS captured by a sensing element SEL is processed by an input wide-band band-pass filter WBF and then its version IF is applied in parallel to a limiting amplifier (hard limiter) LIM and a linear amplifier LIN. The gain of the linear amplifier LIN is adjusted via input NL to obtain signals normalised with respect to the noise standard deviation $\sigma_N$.

It should be noted that the input wide-band band-pass filter WBF may represent bandwidth limitation introduced the sensing element SEL. In this application, the noise reduction factor K (processing gain) is equal to the power bandwidth of the filter WBF divided by that of the narrow-band filter BFZ (or BFR).

The centre frequency of both band-pass filters, BFZ and BFR, is equal to the frequency of sine-wave pulses to be detected. As known to those skilled in the art, the approximate bandwidth of those filters should be inversely

proportional to the duration of sine-wave pulses to be detected.

The output HS of the limiting amplifier LIM is filtered in a band-pass filter BFR, whose output FH drives a logarithmic envelope detector LER. In a parallel channel, the output VS of the linear amplifier LIN is filtered in a band-pass filter BFZ, whose output FZ drives a logarithmic envelope detector LEZ.

The outputs, LZ and LR, of the logarithmic envelope detectors, LEZ and LER, provide, respectively, representations of the *logarithm of signal envelope*, ln(Z), and the *logarithm of phase concentration*, ln(R). The outputs, LZ and LR, are connected to inputs of two constant-gain amplifiers, GA4 (having gain 4) and GA2 (having gain 2). An adder SUM forms the sum of the inputs Z4 and Z2 driven, respectively, by the amplifiers GA4 and GA2.

The main function of the above arrangement is to simplify calculations required to implement a generalised coherent energy detector ($\Gamma = 4$, $\Omega = 2$). The performed operations can be summarized as follows

$$\mathrm{ZR} = 4\ln Z + 2\ln R = \ln(Z^4 R^2) \qquad \ldots (54)$$

The signal ZR is delayed in a constant-delay element DEL by an amount of $T_P/2$, equal to a half of the (known) pulse repetition interval, to obtain a delayed version DP. Both the signals, ZR and DP, are then applied to an adder DIF that determines the difference

$$\mathrm{SV} = \mathrm{ZR} - \mathrm{DP} \qquad \ldots (55)$$

To facilitate the understanding of the performed operations, Fig. 15 depicts symbolically the waveforms ZR, DP and SV. As seen, the waveform SV is bipolar and, when sine-wave pulses are present, it will exhibit a distinct periodicity with a dominant frequency component. However, in noise-alone case, the waveform SV will have a noise-like appearance with many different frequency components.

The waveform SV is applied to a narrow-band filter NBF with centre frequency equal to 1/Tp. The selected bandwidth of this filter is inversely proportional to the required observation (integration) time. For example, if observation time is chosen to be 0.01 s, then the approximate bandwidth should be equal to 100 Hz.

It should be noted that the filter NBF performs linear integration of logarithms, and not their arguments. Therefore, the resulting average will represent a geometric rather than arithmetic mean. As known to those skilled in the art, a geometric mean can produce more 'robust' results that those produced by its arithmetic counterpart.

The output FV (shown in Fig. 15) of the narrow-band filter NBF has a shape of a sinusoidal waveform whose amplitude is indicative of the power of sine-wave pulses captured by the sensing element SEL. An envelope detector EDT determines the amplitude value VV to be transmitted by a transmit element TEL to a data fusion centre DFC.

The data fusion centre DFC will have received similar data from all other sensors forming the network. All relevant data will then be suitably combined to make an optimum detection decision. In this arrangement, sensors do not make any 'local' decisions; each just sends one value that represents 'local' observations compressed to a single number.

Modifications and Variations

Many modifications and variations can be made to the processing operations described above and the apparatus for carrying out the processing operations.

For example, in the processing described above, the mean level measure is calculated as the envelope Z in accordance with equation (18) above. However, other mean level measures may be used instead. For example, if $S_m$, m= 1, 2, ..., M, are samples of a zero-mean signal, then a suitable alternative mean level measure, $Z_d$, is

$$Z_d = \left( \frac{1}{M} \sum_{m=1}^{M} | s_m |^d \right)^{1/d} \qquad \ldots . (56)$$

When d=1, $Z_1$ is just the mean absolute value; when d=2, $Z_2$ is a conventional rms value; when d>2, $Z_d$ is indicative of the signal level associated with its 'generalised' power (the concept of a so-called 'generalised power' is

well-known to a skilled person).

Similarly, in the processing described above, the zero-crossing concordance measure is calculated as the phase concentration R in accordance with equation (12) above. This form of zero-crossing concordance measure has the advantage that its value increases as the strength of the sinusoidal waveform in the received signal increases. In this way, the values of both the mean level measure and the zero-crossing concordance measure move in the same direction.

However, other zero-crossing concordance measures may be used instead. By way of a first example, a circular range can be used as the zero-crossing concordance measure, where the circular range is the length of the smallest circular arc which contains all, or a substantial portion of, the phase observations. One way of calculating a circular range is to calculate $\theta_k$ for each sample pair using equations (11) above, thereby defining points $\theta 1, ..., \theta_K$ lying on a unit circle in the range $0 \leq \theta_k \leq 2\pi$, k = 1,2, ......, K.

Let $\theta(1) \leq ... \leq \theta_K$ be the linear order statistics of $\theta 1, ..., \theta_K$. The arc lengths between adjacent observations are:

$$Tk = \theta_{(k+1)} - \theta_{(k)},\ k = 1, \ldots, K\text{-}1; \quad T_K = 2\pi - \theta_{(K)} + \theta_{(1)} \qquad .... (57)$$

The circular range, ω, is then given:

$$\omega = 2\pi - \max(T1, \ldots, TK) \qquad .... (58)$$

By way of a second example, a circular mean difference, $\overline{Do}$, can be used as the zero-crossing concordance measure, where $\overline{Do}$ represents the mean distance between pairs of data points and is given by:

$$\overline{Do} = \frac{1}{K^2} \sum_{k=1}^{K} \sum_{j=1}^{K} \{\pi - |\,(\pi - |\,\theta_k - \theta_j\,|)|\} \qquad .... (59)$$

By way of further examples, a measure of circular variance, V, circular dispersion, $\hat{\delta}$, or circular standard deviation, υ, based on the calculated phase concentration R may be used as the zero-crossing concordance measure. For example, the following may be used:

$$V = 1 - R \qquad .... (60)$$

$$\hat{\delta} = \frac{1 - R_2}{2R^2} \qquad .... (61)$$

$$\upsilon = \{-2 \log R\}^{1/2} \qquad .... (62)$$

where the quantity $R_2$ in equation (61) is determined from equation (12) when $\cos \theta_k$ and $\sin \theta_k$ are replaced, respectively, with $\cos 2\theta_k$ and $\sin 2\theta_k$.

These and other measures of phase dispersion/concentration are discussed in more detail in: K. V. Mardia and P.E. Jupp "Directional Statistics", Wiley, New York 2000, pp. 17-20.

Of course, the skilled person will realise that other measures of phase dispersion/concentration can be employed

as the zero-crossing concordance measure.

For example, when signal-to-noise ratio is large (or at least, moderate), a conventional (linear) standard deviation can be employed as a measure of phase dispersion. Although not optimal for circular observations, it can still provide a useful measure of the zero-crossing discordance and consequently can be used to develop a useful zero-crossing concordance measure.

In light of the above description of the many different measures that can be used as the mean level measure and the zero-crossing concordance measure, it will be appreciated that the detection equations (41) and (42) above can be written in the generalised form

$$\sum_{m=1}^{M} L_m^{\Gamma} H^{\Omega}(C_m) > \Lambda_{G1} \qquad \ldots (63)$$

and

$$\sum_{m=1}^{M} L_m^{\Gamma} C_m^{\Omega} > \Lambda_{G2} \qquad \ldots (64)$$

where L is the calculated mean level measure, C is the calculated zero-crossing concordance measure, and $\Lambda_{G1}$ and $\Lambda_{G2}$ are suitably chosen decision thresholds.

It will further be appreciated that the form of the equation for the weighting function H may differ from that given above in equation (24), if a measure other than the phase concentration R is used as the zero-crossing concordance measure. However, irrespective of the used measure of zero-crossing concordance, the weighting function H will always remain a non-decreasing function of this measure, and in particular will have a general shape of a soft limiter.

The foregoing description of preferred embodiments of the invention has been presented for the purpose of illustration and description. It is not intended to be exhaustive or to limit the invention to the precise form disclosed. In light of the foregoing description, it is evident that many alterations, modifications, and variations will enable those skilled in the art to utilise the invention in various embodiments suited to the particular use contemplated.

## Claims

**1.** A signal processing method, comprising:

processing a received signal to calculate a measure of the mean level of the signal and a measure of the concordance of a zero-crossing pattern of the signal with a uniform pattern exhibited by a sinusoidal waveform having a frequency equal to the centre frequency of the signal;
calculating a product using the measure of the mean level of the signal and the measure of the concordance in accordance with the formula $L^{\Gamma}H^{\Omega}(C)$ or $L^{\Gamma}C^{\Omega}$, where: L is the measure of the mean level of the signal; C is the measure of the concordance; H is a weighting function; $\Gamma$ is a, not necessarily integer, value greater than or equal to 1; and $\Omega$ is a non-zero, not necessarily integer, value not exceeding that of $\Gamma$; and
determining whether the received signal contains a sinusoidal waveform in dependence upon the calculated product and a decision threshold.

**2.** A method according to Claim 1, wherein the measure of the mean level of the signal is a normalised measure with respect to a noise level.

**3.** A method according to Claim 1 or Claim 2, wherein a respective product is calculated for each of a plurality of signal segments, and the process of determining whether the received signal contains a sinusoidal waveform comprises summing or averaging the respective products and comparing the resulting sum or average with the decision threshold.

**4.** A method according to any preceding claim, wherein:

the measure of the mean level of the signal comprises an envelope of the received signal; and
the measure of the concordance comprises a phase concentration.

**5.** A method according to Claim 4, wherein the weighting function H is a function of $\psi(R)$, where R is the phase concentration and $\psi(R)$ is a non-decreasing function of R.

**6.** A method according to Claim 5, wherein $\psi(R)$ is a polynomial function comprising R, $R^3$ and $R^7$.

**7.** A method according to Claim 6, wherein:

$$\psi(R) \approx \frac{\pi}{2}\left(R - \frac{R^3}{3} + \frac{R^7}{5}\right)$$

**8.** A method according to any of Claims 5 to 7, wherein the weighting function H is a function of tan $\Psi(R)$.

**9.** A method according to Claim 8, wherein:

$$H(R) = \sqrt{\frac{K\tan^2\psi(R)}{2 + K\tan^2\psi(R)}}$$

where *K* is a constant.

**10.** A method according to any preceding claim, wherein $1 \le \Gamma \le 5$.

**11.** A method according to Claim 10, wherein $\Gamma=2$ and $\Omega = 1$ or $\Gamma=4$ and $\Omega=2$.

**12.** A signal processing apparatus, comprising
means for processing a received signal to calculate a first value comprising a measure of the mean level of the signal and a second value comprising a measure of the concordance of a zero-crossing pattern of the signal with a uniform pattern exhibited by a sinusoidal waveform having a frequency equal to the centre frequency of the signal; and
means for calculating a product for use in determining whether a signal is present using the measure of the mean level of the signal and the measure of the concordance in accordance with at least one of the formulae $L^{\Gamma}H^{\Omega}(C)$ and $L^{\Gamma}H^{\Omega}(C)$, where: L is the measure of the mean level of the signal; C is the measure of the concordance; H is a weighting function; $\Gamma$ is a, not necessarily integer, value greater than or equal to 1; and $\Omega$ is a non-zero, not necessarily integer, value not exceeding that of $\Gamma$.

**13.** Apparatus according to Claim 12, further comprising:

means for transmitting the calculated product to a remote processing apparatus for use thereby in determining whether a signal is present.

**14.** Apparatus according to Claim 12 or Claim 13, further comprising:

means for determining whether the received signal contains a sinusoidal waveform in dependence upon the calculated product and a decision threshold.

**15.** Apparatus according to any of Claims 12 to 14, wherein:

the means for processing the received signal to calculate the first and second values is arranged to calculate a logarithm of the first value and a logarithm of the second value; and
the means for calculating the product is arranged to add the logarithm of the first value and the logarithm of the second value.

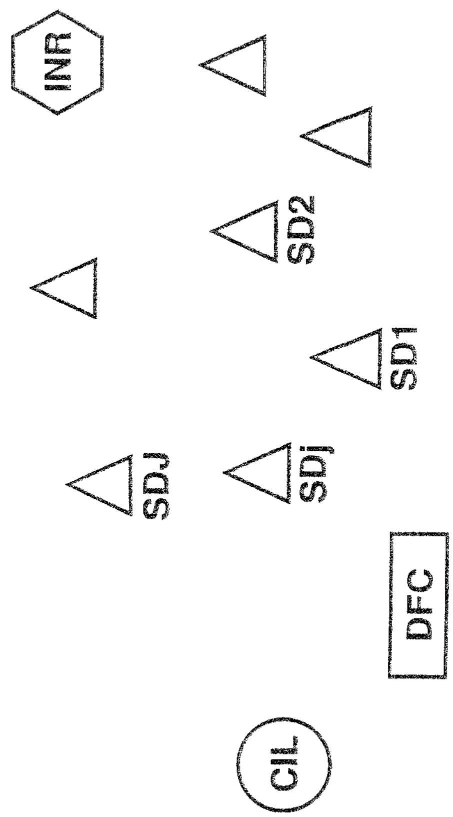


FIG. 1

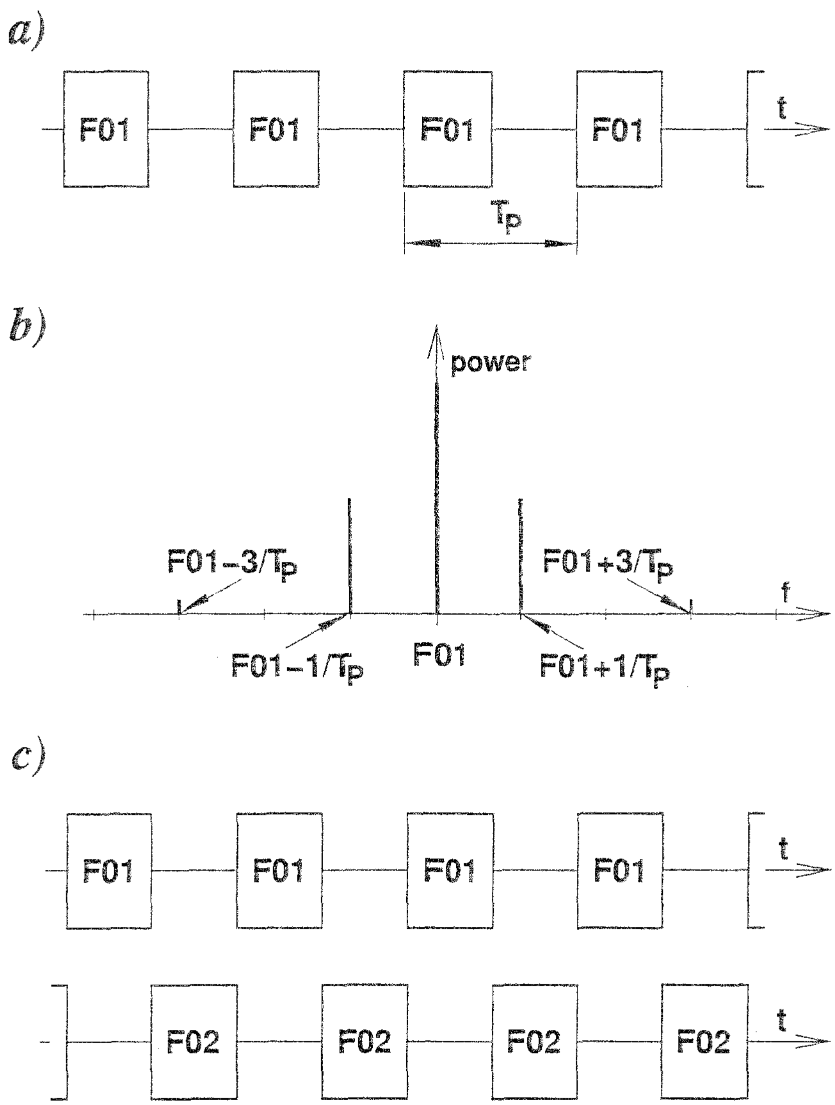
a)
F01
F01
F01
F01
t
$T_P$
b)
power
F01−3/$T_P$
F01+3/$T_P$
f
F01−1/$T_P$
F01
F01+1/$T_P$
c)
F01
F01
F01
F01
t
F02
F02
F02
F02
t

*FIG. 2*

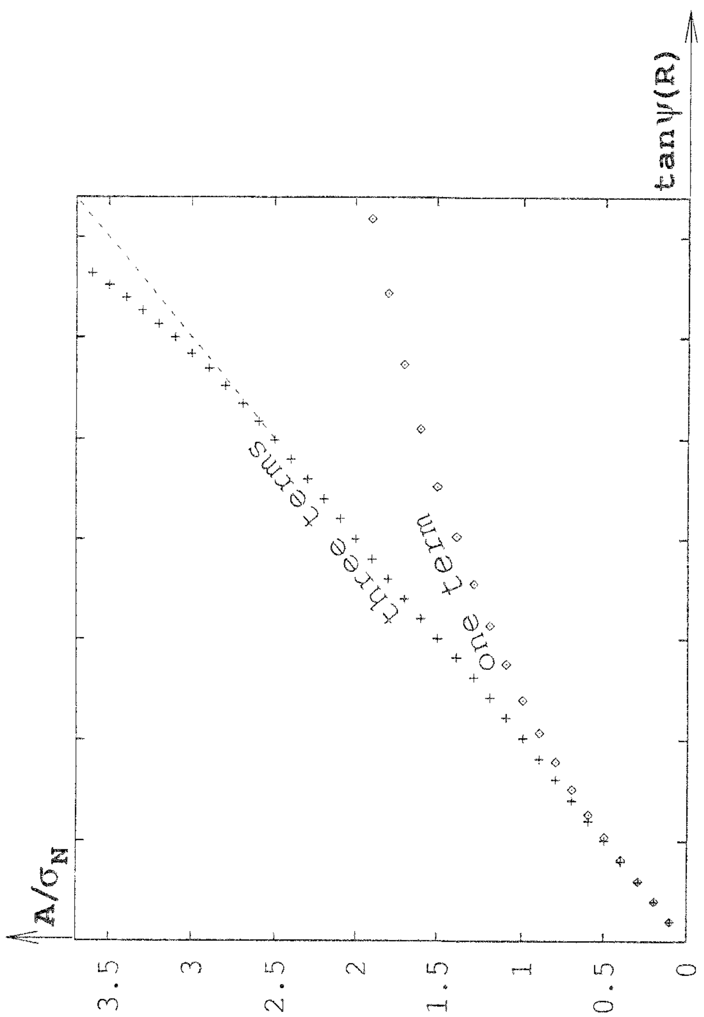


FIG. 3

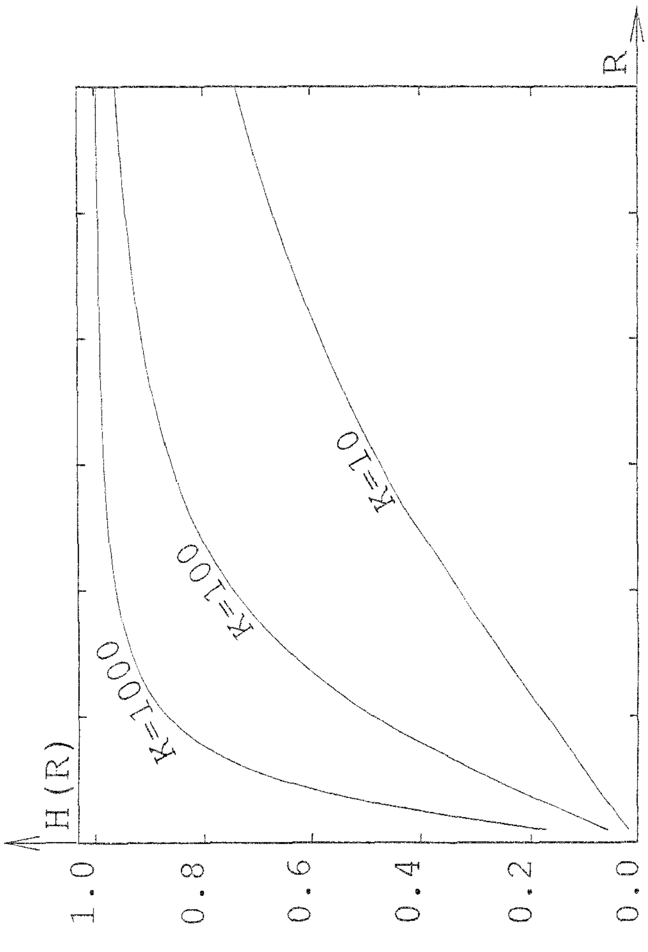


*FIG. 4*

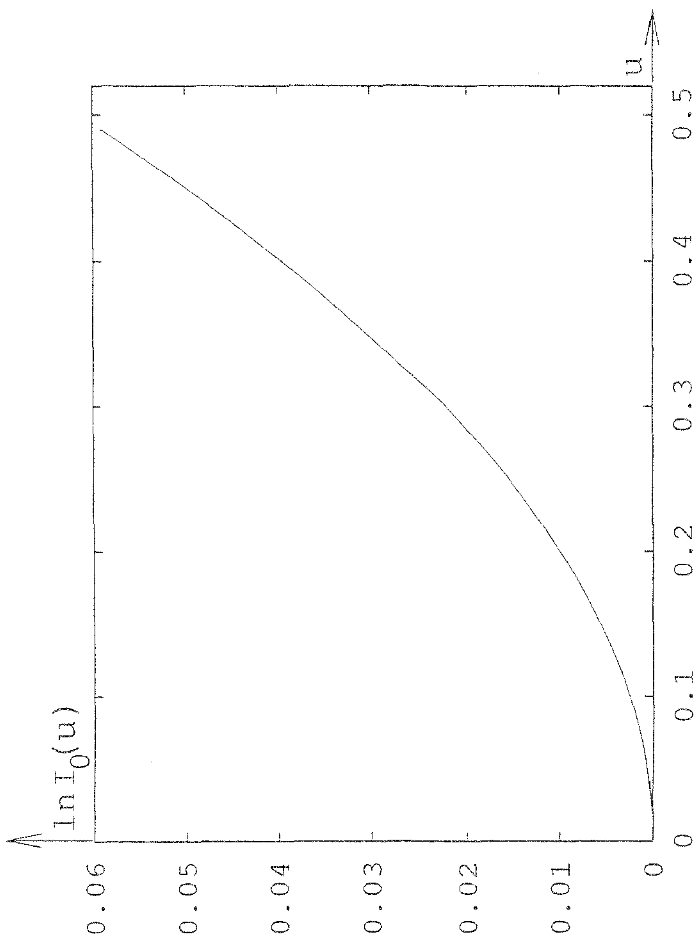


*FIG. 5*

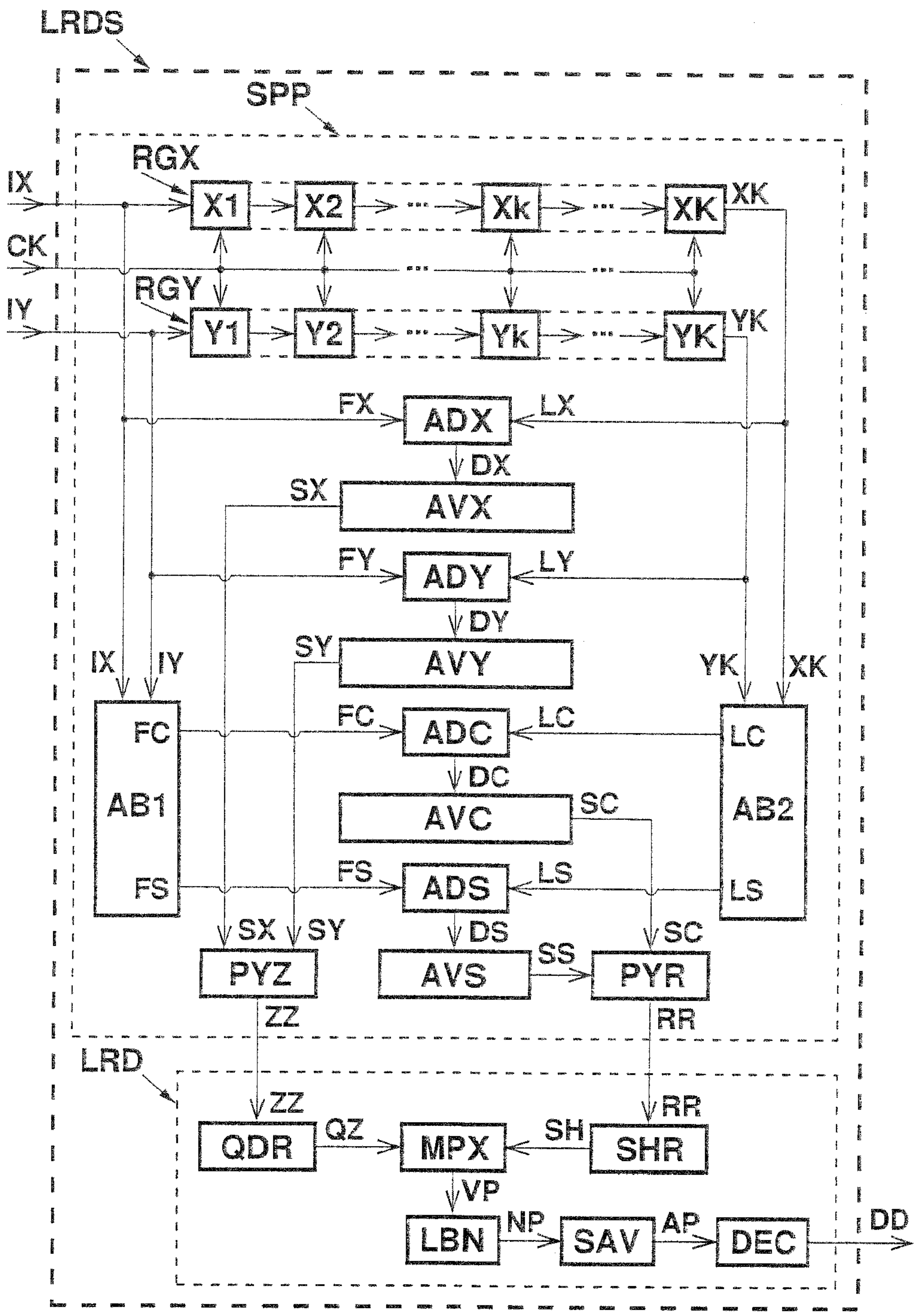
LRDS
SPP
RGX
IX
X1
X2
Xk
XK
XK
CK
RGY
IY
Y1
Y2
Yk
YK
YK
FX
ADX
LX
DX
SX
AVX
FY
ADY
LY
DY
SY
AVY
IX
IY
YK
XK
FC
AB1
FS
FC
ADC
LC
DC
AVC
SC
FS
ADS
LS
LC
AB2
LS
SX
SY
DS
SC
PYZ
AVS
SS
PYR
ZZ
RR
LRD
ZZ
RR
QDR
QZ
MPX
SH
SHR
VP
LBN
NP
SAV
AP
DEC
DD

*FIG. 6*

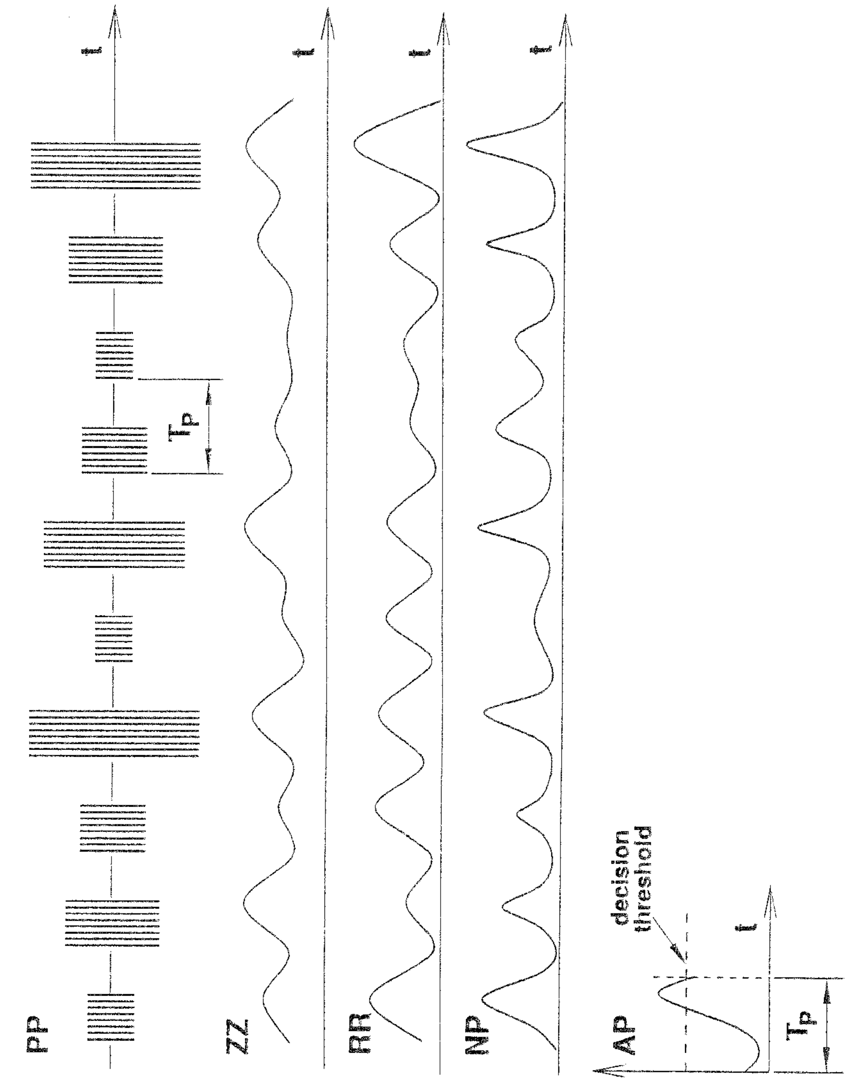


FIG. 7

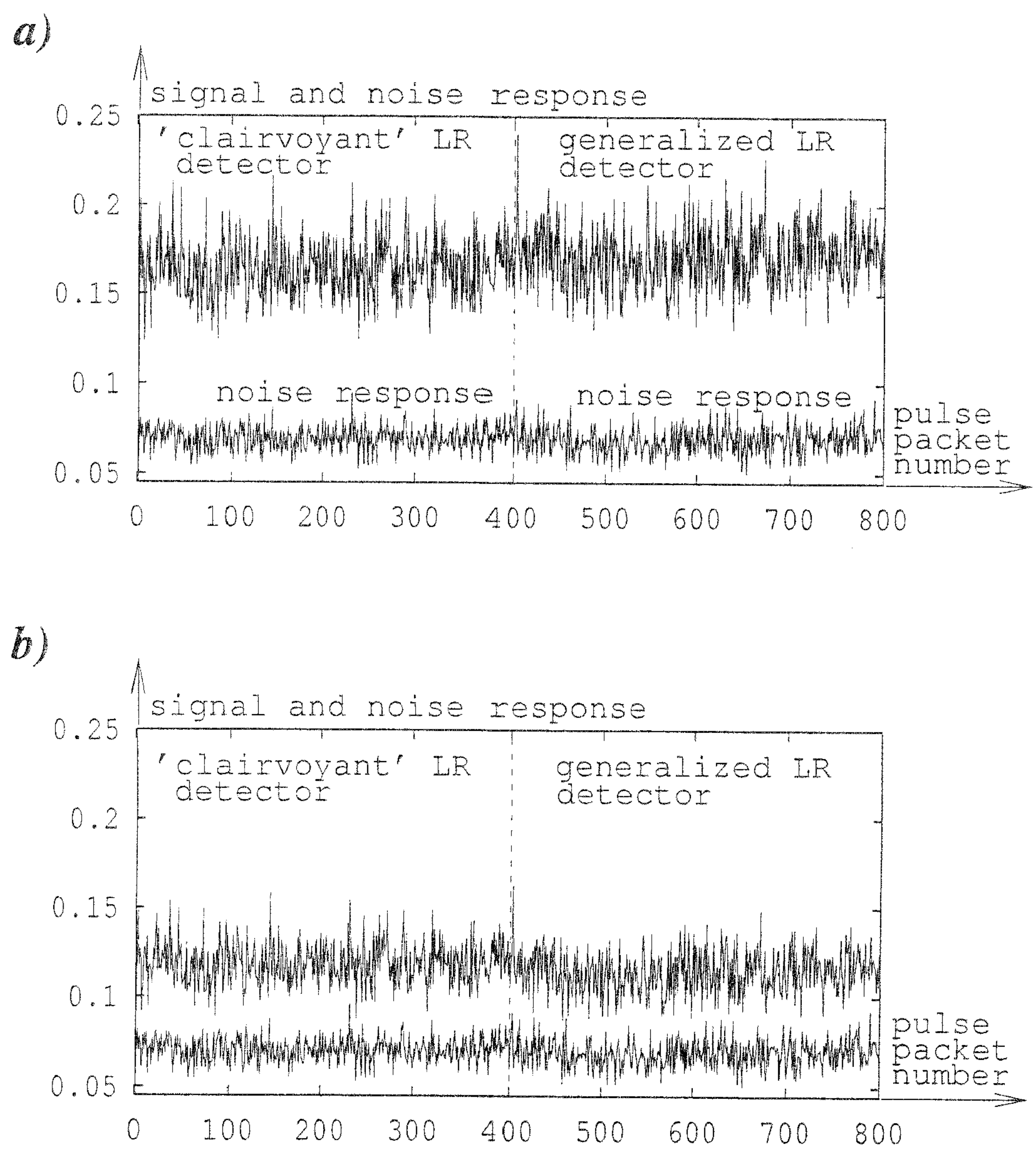
a)
signal and noise response
'clairvoyant' LR detector
generalized LR detector
noise response
noise response
pulse packet number
0.25
0.2
0.15
0.1
0.05
0 100 200 300 400 500 600 700 800
b)
signal and noise response
'clairvoyant' LR detector
generalized LR detector
pulse packet number
0.25
0.2
0.15
0.1
0.05
0 100 200 300 400 500 600 700 800

*FIG. 8*

*a)*

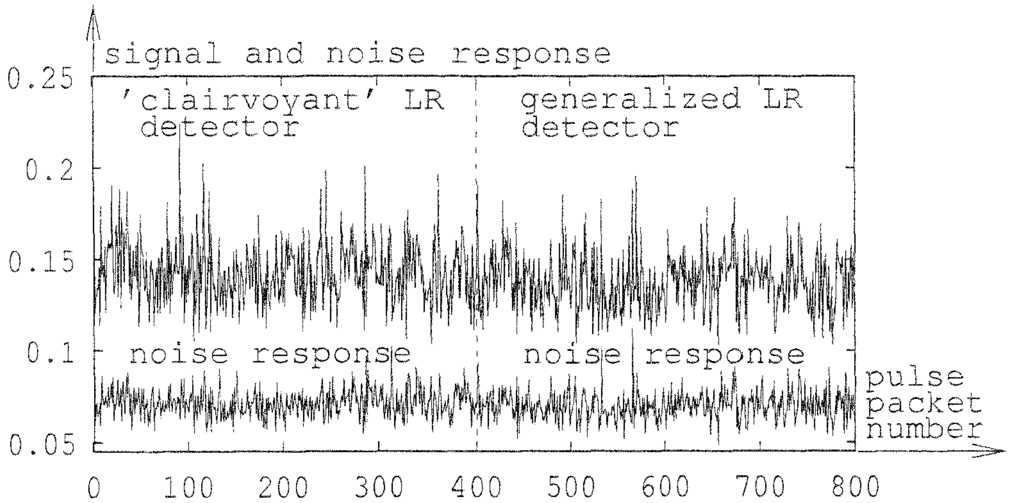
signal and noise response
0.25
0.2
0.15
0.1
0.05
'clairvoyant' LR detector
generalized LR detector
noise response
noise response
pulse packet number
0
100
200
300
400
500
600
700
800

*b)*

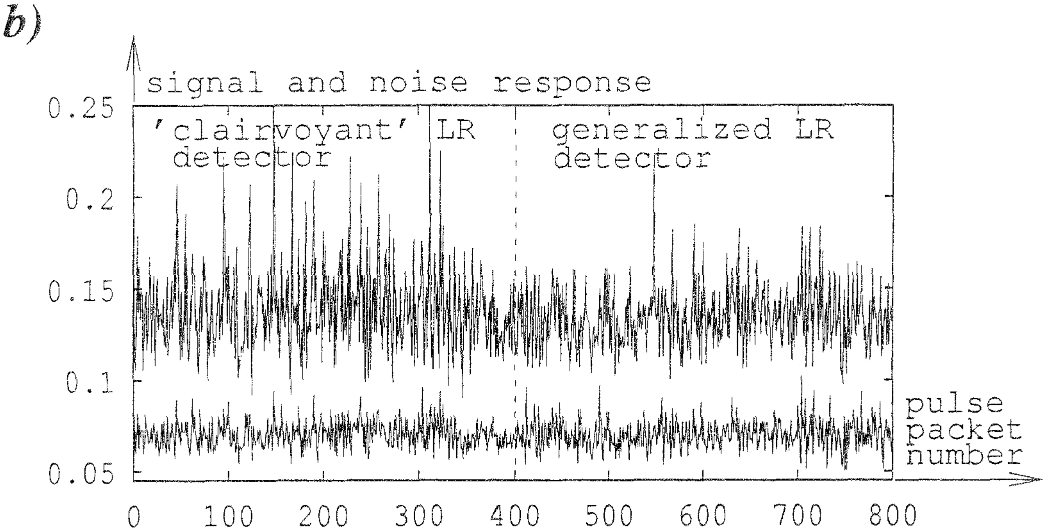
signal and noise response
0.25
0.2
0.15
0.1
0.05
'clairvoyant' LR detector
generalized LR detector
pulse packet number
0
100
200
300
400
500
600
700
800

*FIG. 9*

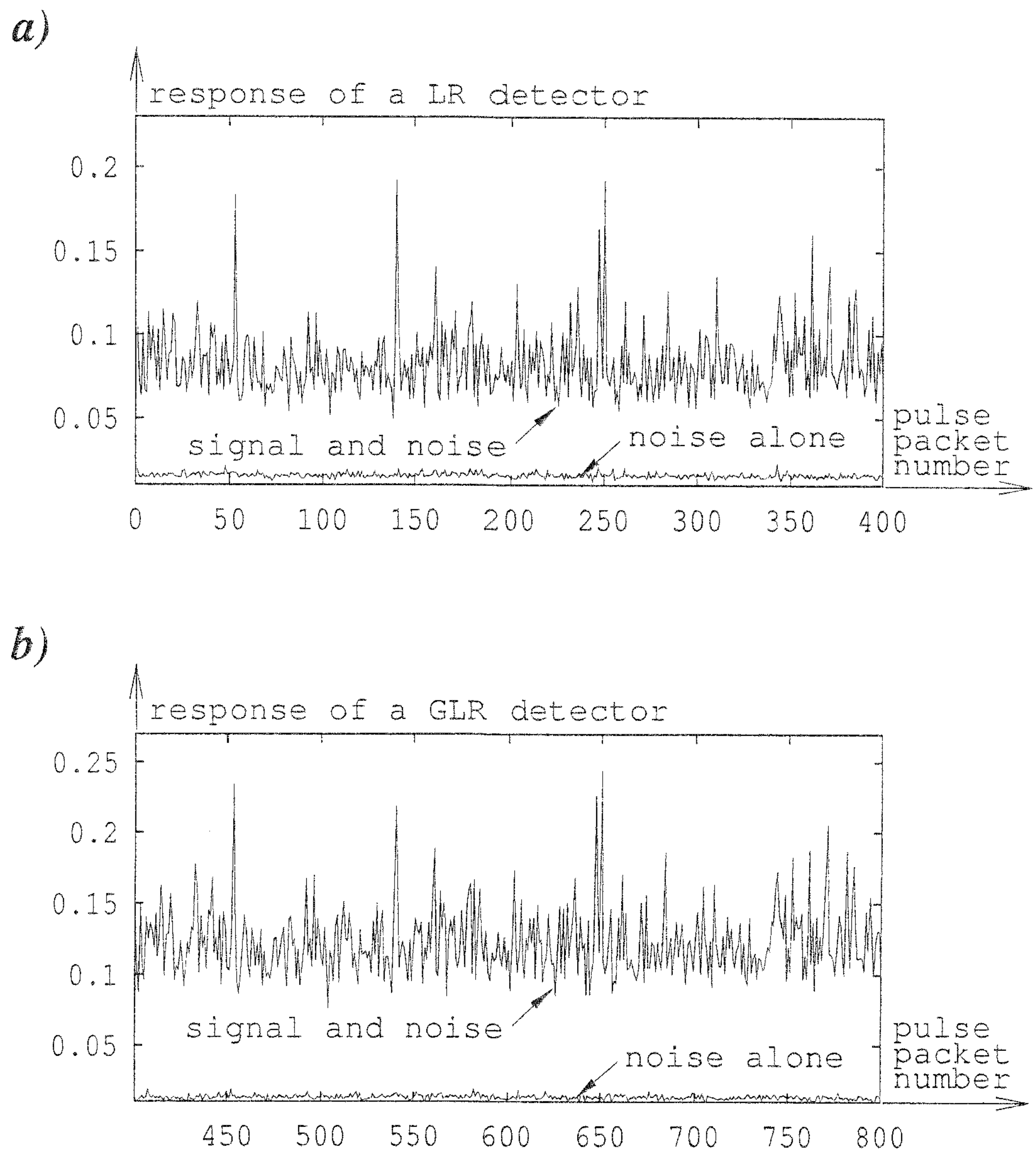
a)
response of a LR detector
0.2
0.15
0.1
0.05
signal and noise
noise alone
pulse packet number
0
50
100
150
200
250
300
350
400
b)
response of a GLR detector
0.25
0.2
0.15
0.1
0.05
signal and noise
noise alone
pulse packet number
450
500
550
600
650
700
750
800

FIG. 10

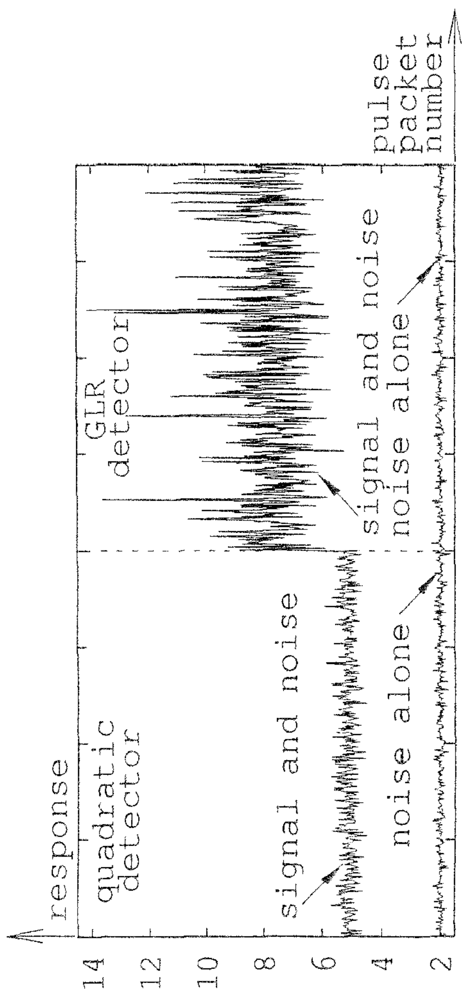

response
quadratic detector
signal and noise
noise alone
GLR detector
signal and noise
noise alone
pulse packet number
14
12
10
8
6
4
2
0
100
200
300
400
500
600
700
800


FIG. 11

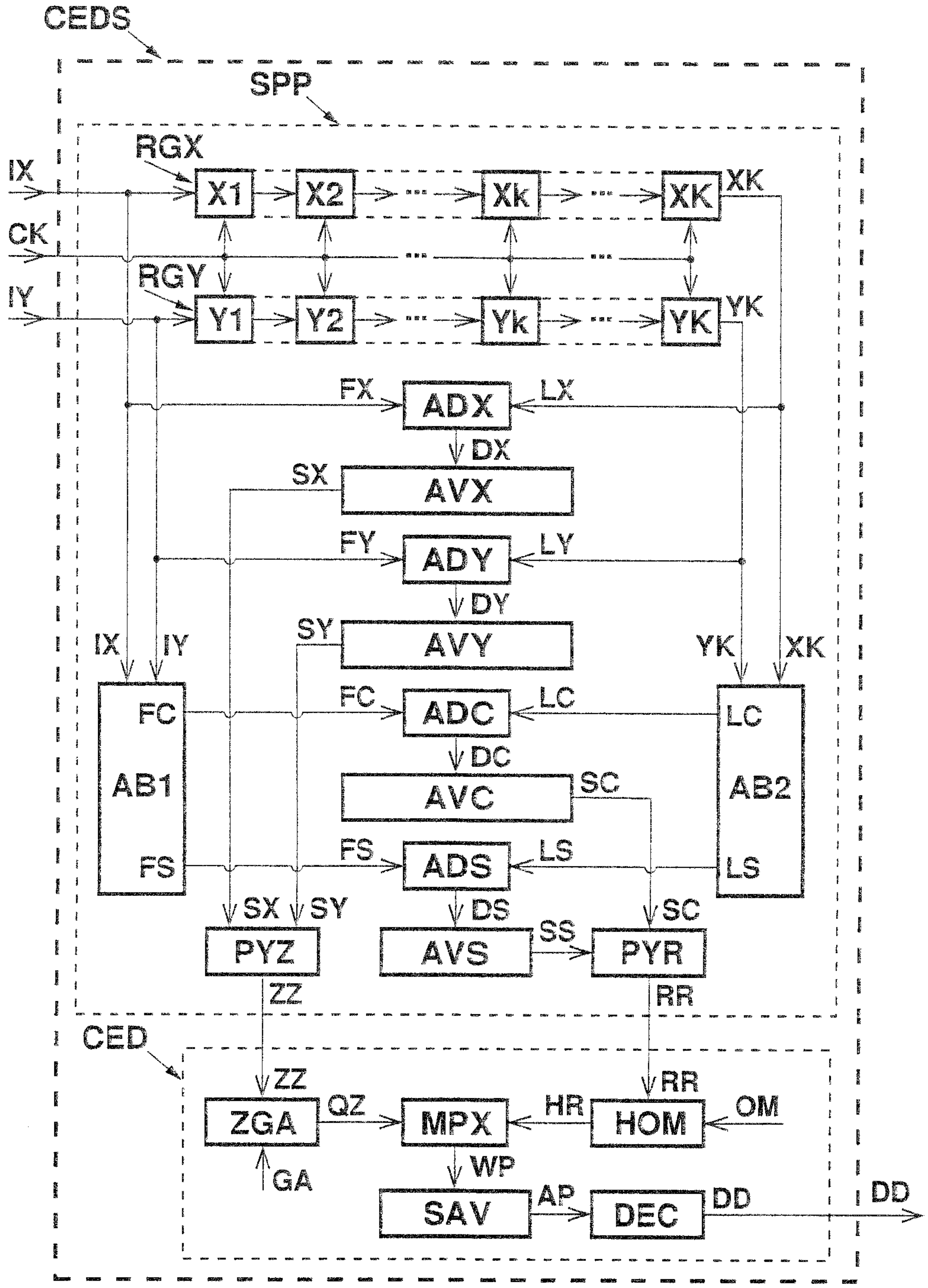
CEDS
SPP
RGX
IX
CK
IY
RGY
X1
X2
Xk
XK
Y1
Y2
Yk
YK
FX
ADX
LX
DX
SX
AVX
FY
ADY
LY
DY
SY
AVY
YK
XK
FC
ADC
LC
AB1
DC
AVC
SC
AB2
FS
ADS
LS
SX
SY
PYZ
DS
AVS
SS
PYR
ZZ
RR
CED
ZGA
QZ
MPX
HR
HOM
OM
GA
WP
SAV
AP
DEC
DD

FIG. 12

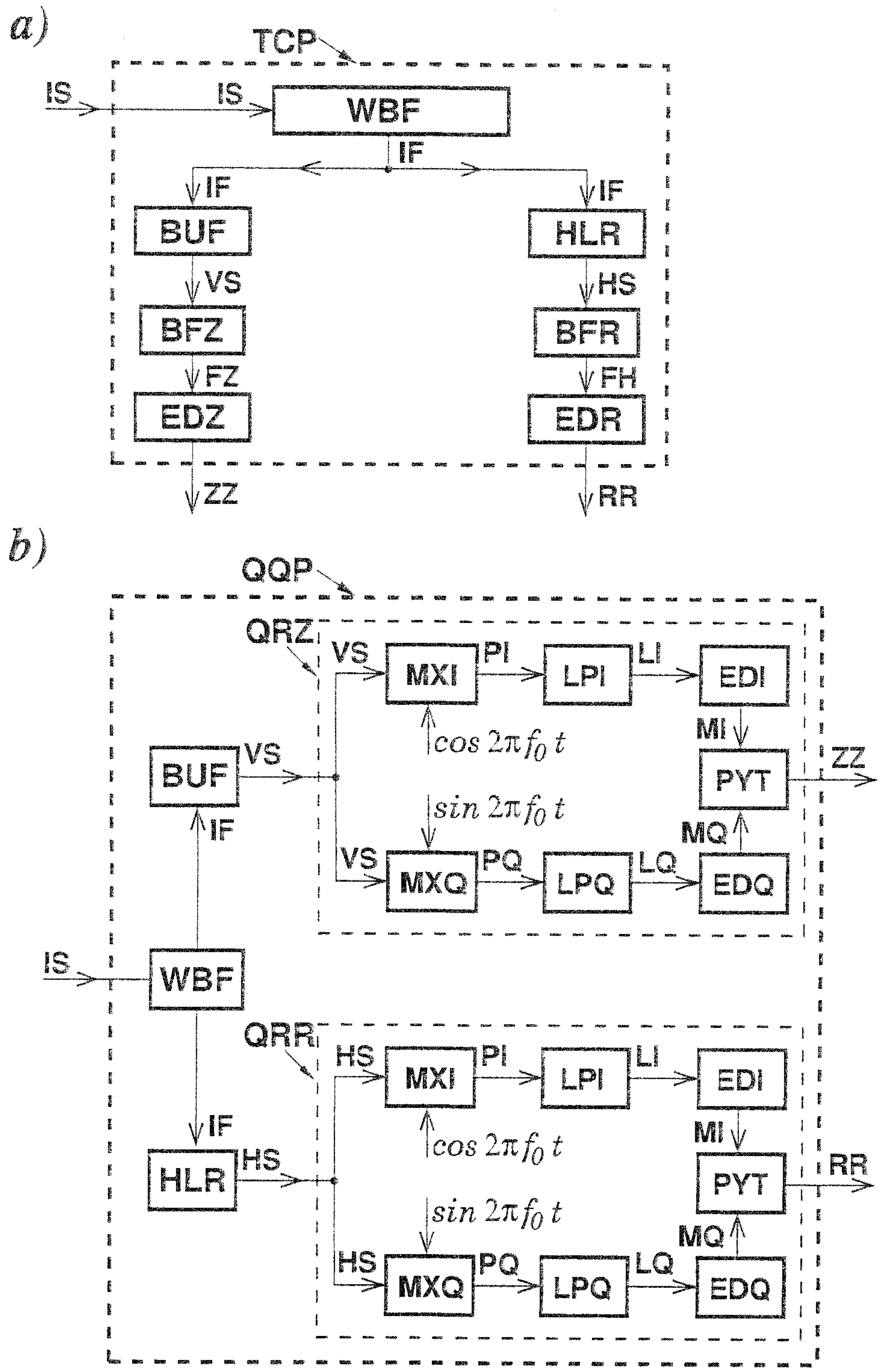
a)
TCP
IS
IS
WBF
IF
IF
IF
BUF
HLR
VS
HS
BFZ
BFR
FZ
FH
EDZ
EDR
ZZ
RR
b)
QQP
QRZ
VS
MXI
PI
LPI
LI
EDI
BUF
VS
cos 2π f0 t
MI
PYT
ZZ
sin 2π f0 t
IF
MQ
VS
MXQ
PQ
LPQ
LQ
EDQ
IS
WBF
QRR
HS
MXI
PI
LPI
LI
EDI
IF
cos 2π f0 t
MI
HLR
HS
PYT
RR
sin 2π f0 t
MQ
HS
MXQ
PQ
LPQ
LQ
EDQ

*FIG. 13*

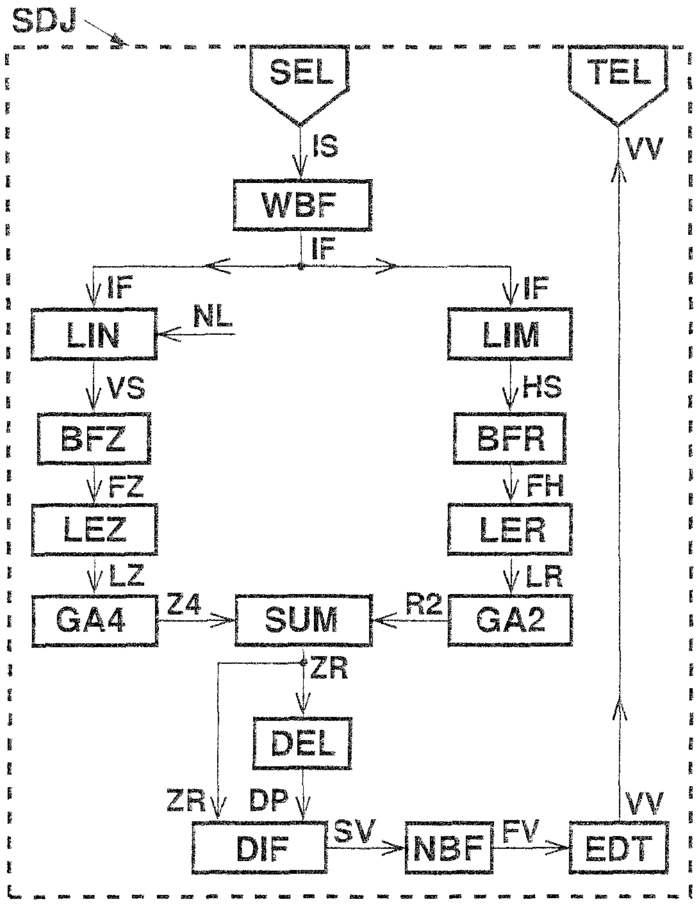
SDJ
SEL
TEL
IS
VV
WBF
IF
IF
IF
LIN
NL
LIM
VS
HS
BFZ
BFR
FZ
FH
LEZ
LER
LZ
LR
GA4
Z4
SUM
R2
GA2
ZR
DEL
ZR
DP
VV
DIF
SV
NBF
FV
EDT

FIG. 14

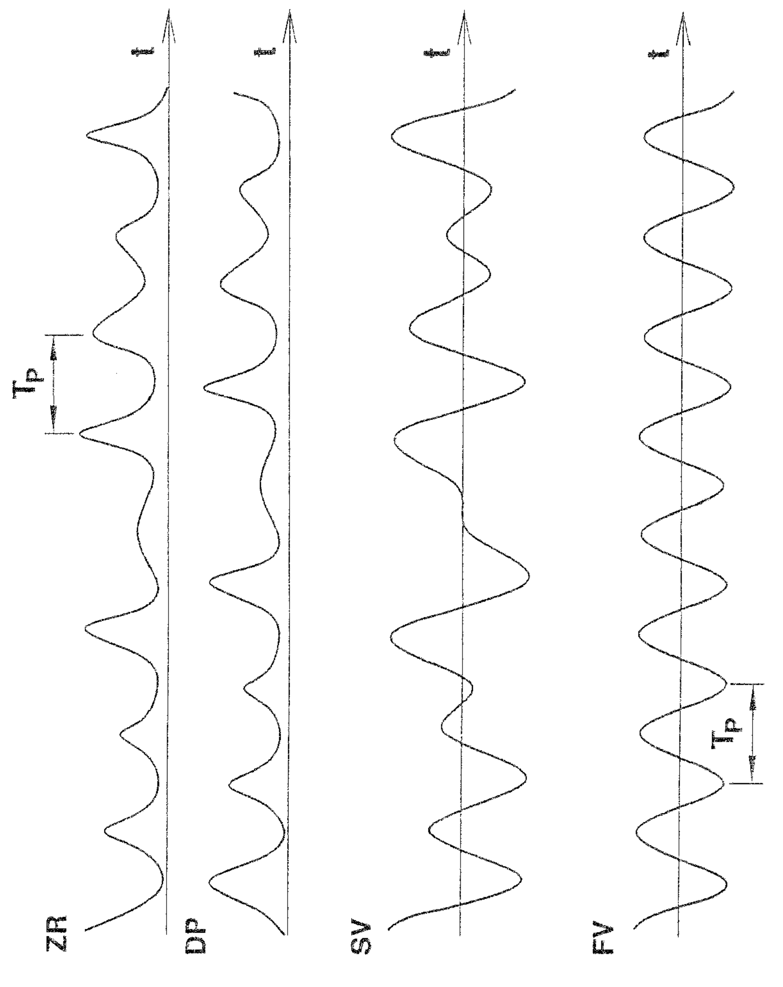


FIG. 15

Europäisches Patentamt
European Patent Office
Office européen des brevets

# EUROPEAN SEARCH REPORT

Application Number
EP 09 17 6195

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br><br><br><br><br><br>Y | KEMAN LIU ET AL: "A statistical method for underwater target detection" PROCEEDINGS OF THE 7TH WORLD CONGRESS ON INTELLIGENT CONTROL AND AUTOMATION IEEE,, 25 June 2008 (2008-06-25), - 27 June 2008 (2008-06-27) pages 5878-5882, XP031300796 Chongqing, China<br>ISBN: 978-1-4244-2113-8<br>* abstract; figure 1 *<br>* page 5879, left-hand column, line 15 - line 28 *<br>* page 5879, right-hand column, line 12 - line 17 * | 1-3, 10-15<br><br><br><br><br><br><br><br>4-9 | INV.<br>G01S7/292<br>G01S7/52<br>G01S7/527<br>G01S13/04<br>G01S15/04 |
| X | US 2008/082278 A1 (TAN KAN [US] ET AL) 3 April 2008 (2008-04-03)<br>* abstract; figure 8 *<br>* paragraphs [0023], [0024] * | 12,13,15 | |
| Y<br><br><br><br>A | WO 2004/097452 A1 (QINETIQ LTD [GB]; SZAJNOWSKI WIESLAW JERZY [GB]; POTTER SIMON [GB]; WY) 11 November 2004 (2004-11-11)<br>* abstract; figures 3-5 *<br>* page 12, line 15 - page 17, line 16 * | 4-9<br><br><br><br>1-3, 10-15 | TECHNICAL FIELDS SEARCHED (IPC)<br>G01S |
| Y,D | K.V. MARDIA; P.E. JUPP: "Directional Statistics"<br>2000, WILEY , XP007912956<br>ISBN: 0471953334 , pages 13-23<br>* Chapter 2.3 * | 4-9 | |

The present search report has been drawn up for all claims

1

| Place of search | Date of completion of the search | Examiner |
|---|---|---|
| Munich | 11 May 2010 | Knoll, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 09 17 6195

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2010

| Patent document cited in search report | Publication date | Patent family member(s) | Publication date |
|---|---|---|---|
| US 2008082278 A1 | 03-04-2008 | CN 101523224 A | 02-09-2009 |
| | | EP 2067046 A2 | 10-06-2009 |
| | | JP 2010505124 T | 18-02-2010 |
| | | KR 20090057047 A | 03-06-2009 |
| | | WO 2008042506 A2 | 10-04-2008 |
| WO 2004097452 A1 | 11-11-2004 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **R. N. McDonough ; A. D. Whalen.** Detection of Signals in Noise. Academic Press, 1995
- **K.V. Mardia ; P.E. Jupp.** Directional Statistics. Wiley, 2000, 17
- **K. V. Mardia ; P.E. Jupp.** Directional Statistics. Wiley, 2000, 17-20